# EUROPÄISCHE PATENTSCHRIFT

(11) **EP 4 012 517 B1**
(45) Veröffentlichungstag und Bekanntmachung des Hinweises auf die Patenterteilung: **10.04.2024**
(21) Anmeldenummer: 20306537.0
(22) Anmeldetag: 10.12.2020
(51) Int. Cl.: G05B 19/05

(54) **AUSFÜHRUNGSUMGEBUNG ZUR AUSFÜHRUNG EINES EREIGNISORIENTIERTEN STEUERPROGRAMMS**
EXECUTION ENVIRONMENT FOR EXECUTING AN EVENT-ORIENTED CONTROL PROGRAM
ENVIRONNEMENT D'EXÉCUTION PERMETTANT D'EXÉCUTER UN PROGRAMME DE COMMANDE AXÉ SUR LES ÉVÉNEMENTS

(43) Veröffentlichungstag der Anmeldung: 15.06.2022
(73) Patentinhaber: Schneider Electric Industries SAS, 92500 Rueil-Malmaison (FR)
(72) Erfinder: Würr, Marcus, 97837 Erlenbach (DE); Diehm, Sebastian, 97877 Wertheim (DE)
(74) Vertreter: Manitz Finsterwald Patent- und Rechtsanwaltspartnerschaft mbB

(56) Entgegenhaltungen:
- DAI WENBIN ET AL: "Discrete-Event-Based Deterministic Execution Semantics With Timestamps for Industrial Cyber-Physical Systems", IEEE TRANSACTIONS ON SYSTEMS, MAN, AND CYBERNETICS: SYSTEMS, IEEE, PISCATAWAY, NJ, USA, Bd. 50, Nr. 3, 16. August 2017 (2017-08-16), Seiten 851-862, XP011773154, ISSN: 2168-2216, DOI: 10.1109/TSMC.2017.2736339 [gefunden am 2020-02-14]

## Beschreibung

Die vorliegende Erfindung betrifft eine Ausführungsumgebung zur Ausführung eines ereignisorientierten Steuerprogramms einer speicherprogrammierbaren Steuerung und ein Verfahren zur Ausführung eines ereignisorientierten Steuerprogramms einer speicherprogrammierbaren Steuerung.

Speicherprogrammierbare Steuerungen werden in der Automatisierungstechnik unter anderem zur Steuerung automatisierter Prozesse und Maschinenabläufe eingesetzt. Hierzu sind die speicherprogrammierbaren Steuerungen üblicherweise mit Sensoren verbunden, welche einen Zustand des automatisierten Prozesses erfassen und den Zustand des Prozesses repräsentierende Sensorsignale an die Steuerung übermitteln. Die Steuerung erzeugt dann auf Grundlage einer logischen Verknüpfung der eingelesenen Sensorsignale Ausgangssignale zur Ansteuerung von Aktoren, wobei die Aktoren auf Grundlage der Ausgangssignale den Zustand des automatisierten Prozesses beeinflussen. Sensoren können beispielsweise Positionsgeber, Drehgeber, Schalter, Lichtschranken oder ähnliches sein, wogegen Aktoren beispielsweise Antriebe, Relais oder Schütze sein können.

Die logischen Verknüpfungen zur Verarbeitung der eingelesenen Sensorsignale und zur Erzeugung der Ausgangssignale sind üblicherweise Bestandteile eines Steuerprogramms der speicherprogrammierbaren Steuerung, welches in einem Speicherbaustein der Steuerung hinterlegt ist. Zur Ausführung des Steuerprogramms umfassen speicherprogrammierbare Steuerungen üblicherweise eine Ausführungsumgebung, die die Steuerbefehle des Steuerprogramms in einer vorgegebenen Reihenfolge ausführt. Zusätzlich kann die Ausführungsumgebung den für die Ausführung der Steuerbefehle benötigten Arbeitsspeicher verwalten und/oder das Einlesen der Sensorsignale, sowie das Ausgeben der Ausgangssignale koordinieren.

Um eine zuverlässige Steuerung automatisierter Prozesse zu gewährleisten, muss die Ausführungsumgebung üblicherweise dazu eingerichtet sein, die Ausgangssignale innerhalb vordefinierter Reaktionszeiten nach dem Einlesen der Sensorsignale bereitzustellen. Derartige Systeme werden auch als echtzeitfähige Steuerungssysteme bezeichnet. Die Ausführungsumgebung muss dabei sicherstellen, dass die vordefinierten Reaktionszeiten unabhängig von der Auslastung des Systems und der Gestaltung des Steuerprogramms, beispielsweise unabhängig von möglichen Programmierfehlern eingehalten werden. Im Falle einer Überschreitung der Reaktionszeiten kann die Ausführungsumgebung geeignete Fehlerreaktionen einleiten. Ein Bereitstellen von Ausgangssignalen innerhalb vordefinierter Reaktionszeiten kann beispielswiese auch eine Voraussetzung für eine sicherheitsgerichtete Steuerung automatisierter Prozesse sein.

Üblicherweise werden echtzeitfähige Steuerungssysteme mittels zyklischer Ausführungsumgebungen realisiert. Bei derartigen Ausführungsumgebungen sind für das Einlesen der Sensorsignale, das Berechnen der Ausgangssignale und das Ausgeben der Ausgangssignale innerhalb jedes Zyklus feste Zeitfenster definiert, wobei sich die einzelnen Zeitfenster über mehrere Zyklen der Reihe nach periodisch wiederholen. Die Zeitfenster definieren dann auch die maximalen Reaktionszeiten des Steuerungssystems. Bei einem zyklischen Steuerungssystem genügt es daher zur Überwachung der Reaktionszeiten, am Ende jedes Verarbeitungszyklus zu überprüfen, ob alle benötigten Ausgangsdaten vorliegen oder nicht.

Neben zyklischen Steuerprogrammen und Ausführungsumgebungen werden in der Automatisierungstechnik auch ereignisgesteuerte Steuerprogramme eingesetzt, wie sie beispielsweise in der Norm IEC 61499 definiert sind. Derartige Steuerprogramme umfassen eine Mehrzahl von Funktionsbausteinen, wobei das Einlesen der Sensorsignale, das logische Verknüpfung der eingelesenen Sensorsignale oder das Ausgeben der Ausgabesignale jeweils durch Kombinationen einzelner Funktionsbausteine und zusätzlichem benutzerdefiniertem Programmtext (Code) realisiert wird. Die Ausführung der Funktionsbausteine erfolgt dabei ereignisgesteuert bei Eintritt von den einzelnen Funktionsbausteinen jeweils zugeordneten Aktivierungsereignissen, wobei die Aktivierungsereignisse nachfolgend auszuführender Funktionsbausteine bei der Ausführung vorangehender Funktionsbausteine erzeugt werden.

Der Artikel Wenbin Dai et al., "Discrete-Event-Based Deterministic Execution Semantics With Timestamps for Industrial Cyber-Physical Systems", IEEE RANSAC-TIONS ON SYSTEMS, MAN, AND CYBERNETICS: SYSTEMS, IEEE, PISCA-TAWAY, NJ, USA, Bd. 50, Nr. 3, 16. August 2017 (2017-08-16), Seiten 851-862 beschreibt eine Ausführungsumgebung für Funktionsbausteine gemäß der Norm IEC 61499.

Ereignisgesteuerte Ausführungsmodelle eignen sich unter anderem für verteilte Steuersysteme, bieten jedoch aufgrund des Fehlens vordefinierter Verarbeitungszyklen keine Möglichkeit, das Einhalten vordefinierter Reaktionszeiten während der Ausführungszeit sicherzustellen. Um die Wahrscheinlichkeit von Reaktionszeitüberschreitungen zu reduzieren, wird die Rechenkapazität bei ereignisgesteuerten Steuerungen üblicherweise weit überdimensioniert, beispielsweise um 50%. Damit wird die Wahrscheinlichkeit reduziert, dass bei hoher Auslastung nicht mehr genügend Rechenkapazität zur rechtzeitigen Ausführung der Funktionsbausteine zur Verfügung steht, wobei jedoch immer noch keine Einhaltung vordefinierter Ausführungszeiten sichergestellt werden kann.

Es ist Aufgabe der Erfindung, eine Ausführungsumgebung zur Ausführung eines ereignisorientierten Steuerprogramms und ein Verfahren zur Ausführung eines ereignisorientierten Steuerprogramms mit verbesserter Echtzeitfähigkeit bereitzustellen.

Diese Aufgabe wird durch eine Ausführungsumgebung zur Ausführung eines ereignisorientierten Steuerprogramms und ein Verfahren zur Ausführung eines ereignisorientierten Steuerprogramms gemäß den unabhängigen Ansprüchen gelöst. Weiterbildungen sind jeweils in den abhängigen Ansprüchen angegeben.

Es wird eine Ausführungsumgebung zur Ausführung eines ereignisorientierten Steuerprogramms einer speicherprogrammierbaren Steuerung angegeben, wobei das Steuerprogramm mehrere nacheinander auszuführende Funktionsmodule umfasst. Dabei ist die Ausführungsumgebung dazu eingerichtet, die Funktionsmodule ereignisgesteuert bei Eintritt von den einzelnen Funktionsmodulen jeweils zugeordneten Aktivierungsereignissen auszuführen, wobei die einzelnen Aktivierungsereignisse der nacheinander auszuführenden Funktionsmodule eine Ereigniskette bilden. Die Ausführungsumgebung umfasst ein Überwachungsmodul zur Überwachung einer Ausführungsdauer der Funktionsmodule der Ereigniskette, wobei das Überwachungsmodul dazu eingerichtet ist, die Ausführungsdauer auf ein Überschreiten einer vorgegebenen Zeitdauer zu überprüfen.

Im Rahmen der Erfindung wurde erkannt, dass auch bei einem ereignisorientierten Steuerprogramm eine Einhaltung vorgegebener Ausführungsdauern dadurch ermöglicht werden kann, dass jeweils Ereignisketten nacheinander auszuführender Funktionsmodule gebildet werden und die für die Ausführung der einzelnen Ereignisketten benötigte Zeit überwacht wird. Bei einem Überschreiten der vorgegebenen Zeitdauer kann dann eine vordefinierte Reaktion erfolgen, beispielsweise die Ausführung des Steuerprogramms gestoppt und/oder Überschreitungsreaktion ausgelöst werden, beispielsweise eine gesteuerte Maschine in einen sicheren Zustand überführt werden. Dies ermöglicht es insbesondere, auch ereignisorientierte Steuerprogramme zur Realisierung von Echtzeitanwendungen einzusetzen, bei denen eine Reaktion auf ein von der Steuerung empfangenes Sensorsignal innerhalb der vorgegebenen Zeitdauer erfolgen muss.

Die Funktionsmodule des Steuerprogramms können jeweils mindestens eine logische Verknüpfung umfassen, wobei eine Ausführung der logischen Verknüpfungen der einzelnen Funktionsmodule jeweils durch die den einzelnen Funktionsmodulen zugeordneten Aktivierungsereignisse ausgelöst wird. Die logischen Verknüpfungen der einzelnen Funktionsmodule können beispielsweise ein jeweiliger Bestandteil eines Algorithmus des betreffenden Funktionsmoduls sein. Die nacheinander auszuführenden Funktionsmodule des Steuerprogramms können jeweils dazu eingerichtet sein, bei ihrer Ausführung Aktivierungsereignisse zu erzeugen, welche die Ausführung des jeweilig unmittelbar nachfolgend auszuführenden Funktionsmoduls der Ereigniskette auslösen. Insofern sind die Funktionsmodule der Ereigniskette, beispielsweise über Ereignisverbindungen, dadurch miteinander verbunden, dass das Aktivierungsereignis jedes nachfolgenden Funktionsmoduls bei Ausführung eines unmittelbar vorangehend ausgeführten Funktionsmoduls erzeugt wird. Die Ereignisverbindungen können dabei jeweils die Beziehung der Aktivierungsereignisse zwischen den einzelnen Funktionsmodulen definieren. Das Steuerprogramm kann beispielsweise die Vorgaben der Norm IEC 61499 erfüllen und bei den Funktionsmodulen kann es sich beispielsweise um in dieser Norm definierte Funktionsbausteine (*function blocks*) handeln.

Allgemein können die Ereignisketten jeweils alle Aktivierungsereignisse umfassen, welche aufgrund eines vorgegebenen Anfangsereignisses erzeugt werden, um die Ausführung der der Reihe nach auszuführenden Funktionsmodule bis zu einem als letztes Funktionsmodul der Ereigniskette auszuführenden Abschlussmodul auszulösen. Bei dem Anfangsereignis kann es sich beispielsweise um ein externes Aktivierungsereignis handeln, welches bei einer Aktivierung einer externen Eingangsschnittstelle der Ausführungsumgebung bereitgestellt wird. Die externe Eingangsschnittstelle kann beispielsweise eine Schnittstelle zu einer die Ausführungsumgebung ausführenden Ausführungsressource der Steuereinheit sein. Insbesondere kann die externe Eingangsschnittstelle eine externe Schnittstelle, etwa ein Sensoreingang, eines das Steuerprogramm ausführenden Geräts sein.

Das Anfangsereignis kann beispielsweise auf Grundlage eines durch die Steuereinheit empfangenen Sensorsignals bereitgestellt werden, beispielsweise bei einem Empfang des Sensorsignals durch die Steuereinheit oder bei einer Statusänderung des durch die Steuereinheit empfangenen Sensorsignals. Ein durch das Anfangsereignis als erstes Funktionsmodul aktiviertes Anfangsmodul kann beispielsweise ein als *responder function block* konfigurierter *service interface function block* gemäß IEC 61499 sein.

Das Abschlussmodul wird durch das letzte Funktionsmodul der Ereigniskette definiert, nach dessen Ausführung keine Aktivierungssignale zur Ausführung weiterer Funktionsmodule des Steuerprogramms mehr erzeugt werden. Bei dem Abschlussmodul kann es sich beispielsweise um ein Funktionsmodul handeln, welches dazu eingerichtet ist, ein Ausgangssignal für einen Aktor über eine externe Ausgabeschnittstelle der Ausführungsumgebung auszugeben. Das Abschlussmodul kann beispielsweise ein als *requester function block* konfigurierter *service interface function block* gemäß IEC 61499 sein. Das Abschlussmodul kann auch ein Funktionsmodul sein, welches dazu eingerichtet ist, bei seiner Ausführung einen internen Status der Steuerung zu verändern oder einen Datenwert zur weiteren Verwendung, beispielsweise zur weiteren Verwendung während der Ausführung des Steuerprogramms, abzuspeichern.

Die vorgegebene Zeitdauer kann beispielsweise eine Reaktionszeit der Steuerung auf ein Eingangssignal definieren. Das Eingangssignal kann beispielsweise die Aktivierung des Anfangsmoduls der Ereigniskette auslösen. Die Ereigniskette kann beispielsweise alle Aktivierungsereignisse umfassen, welche, ausgelöst durch einen Empfang eines Sensorsignals über die Eingangsschnittstelle, der Reihe nach erzeugt werden, bis ein auf Grundlage des Sensorsignals ausgeführtes Abschlussmodul ausgeführt wurde und etwa ein auf Grundlage des Sensorsignals erzeugtes Ausgangssignal über die Ausgabeschnittstelle ausgegeben wird oder ein Status auf Grundlage des Sensorsignals geändert bzw. ein auf Grundlage des Sensorsignals erzeugter Datenwert gespeichert wird.

Das Überprüfen der Ausführungsdauern auf das Überschreiten der vorgegebenen Zeitdauer erfolgt zur Ausführungszeit des Steuerprogramms und/oder zur Ausführungszeit der einzelnen Funktionsmodule der Ereigniskette. Das Überwachungsmodul ist getrennt von einem die einzelnen Funktionsmodule der Ereigniskette ausführenden Ausführungsmodul der Ausführungsumgebung ausgebildet. Ein derartiges Ausführungsmodul kann beispielsweise einen Scheduler umfassen. Das Ausführungsmodul kann beispielsweise Ereignis-Warteschlangen verwalten, in welchen noch auszuführende Aktivierungsereignisse abgelegt werden. Die Ausführungsumgebung bzw. das Ausführungsmodul kann beispielsweise dazu ausgebildet sein, in den Warteschlangen hinterlegte Aktivierungsereignisse mittels eines FIFO-Verfahrens (FIFO: *first-in-first-out*) oder eines LIFO-Verfahrens (LIFO: *last-in-first-out*) abzuarbeiten.

Das Steuerprogramm kann beispielsweise mehrere Ereignisketten umfassen und die Ausführungsumgebung kann dazu eingerichtet sein, die einzelnen Ereignisketten nacheinander oder parallel zueinander auszuführen. Das Überwachungsmodul kann dann dazu eingerichtet sein, die Ausführungsdauern der Funktionsmodule der einzelnen Ereignisketten jeweils auf ein Überschreiten von für die einzelnen Ereignisketten jeweils separat vorgegebene Zeitdauern zu überprüfen. Dabei können die für die einzelnen Ereignisketten jeweils separat vorgegebenen Zeitdauern identisch oder auch zumindest teilweise oder vollständig voneinander verschieden sein.

Die Ausführungsumgebung kann mehrere getrennt voneinander ausführbare Teilumgebungen umfassen, wobei die einzelnen Teilumgebungen dazu ausgebildet sind, auf getrennten Ausführungsressourcen der Steuerung ausgeführt zu werden. Die Ausführungsressourcen können beispielsweise Tasks, Prozessoren, oder ähnliches sein. Beispielsweise können die Ausführungsressourcen in der IEC 61499 definierte Ressourcen sein.

Allgemein können die Ausführungsressourcen durch eine oder mehrere Logikeinheiten der Steuerung bereitgestellt werden, etwa durch CPUs oder Mikroprozessoren. Die Ausführungsressourcen können dabei Mechanismen und Kontextinformationen bereitstellen, die eine Ausführung des Steuerprogramms auf der Logikeinheit erlauben. Dabei können die einzelnen Logikeinheiten dazu ausgebildet sein, mehr als eine, beispielsweise zwei, Ausführungsressourcen parallel und unabhängig voneinander bereitzustellen.

Das Überwachen der Ausführungsdauer durch das Überwachungsmodul kann beispielsweise auf Funktionsmodule beschränkt sein, welche auf der gleichen Ausführungsressource bzw. in der gleichen Teilumgebung ausgeführt werden. So können beispielsweise unterschiedliche Ausführungsprioritäten der einzelnen Funktionsmodule bei der Überwachung berücksichtigt werden, wenn Programmteile bzw. Ereignisketten unterschiedlicher Priorität in unterschiedlichen Teilumgebungen ausgeführt werden. Generell können die einzelnen Ereignisketten des Steuerprogramms jeweils ausschließlich Funktionsmodule umfassen, welche jeweils auf der gleichen Ausführungsressource der speicherprogrammierbaren Steuerung ausgeführt werden. Alternativ kann zumindest eine der Ereignisketten auch auf unterschiedlichen Ausführungsressourcen ausgeführte Funktionsmodule umfassen.

Das Überwachungsmodul kann dazu eingerichtet sein, eine bereits verstrichene Ausführungsdauer anhand eines Zeitstempels zu bestimmen, welcher den Beginn der Ausführungsdauer anzeigt. Dabei kann das Überwachungsmodul den Zeitstempel mit einer aktuellen Zeit vergleichen, um die bereits verstrichene Ausführungsdauer zu bestimmen. Das Überwachungsmodul kann auch dazu eingerichtet sein, eine bereits verstrichene Ausführungsdauer mittels eines zyklischen Pulsgebers zu bestimmen, wobei das Überwachungsmodul dazu eingerichtet ist, die durch den Impulsgeber erzeugten Pulse zu zählen und aus der Anzahl der Pulse die bereits verstrichene Ausführungsdauer zu bestimmen.

Die überwachte Ausführungsdauer kann mit dem Beginn der Ausführung des ersten Funktionsmoduls der Ereigniskette beginnen. Alternativ kann die überwachte Ausführungsdauer auch mit der Erzeugung des Anfangsereignisses beginnen, um Verzögerungen zwischen der Erzeugung des Anfangsereignisses und dem Beginn der Ausführung des ersten Funktionsmoduls bzw. Anfangsmoduls der Ereigniskette zu berücksichtigen.

Die überwachte Ausführungsdauer kann auch eine vor der Erzeugung des Anfangsereignisses verstrichene zusätzliche Verzögerungszeit umfassen. Die zusätzliche Verzögerungszeit kann beispielsweise eine Zeitspanne umfassen, welche seit einem die Erzeugung des Anfangsereignisses auslösenden und außerhalb der Ausführungsumgebung aufgetretenen externen Ursprungsereignisses verstrichen ist, beispielsweise seit der Erzeugung oder Erfassung eines die Ausführung der Ereigniskette auslösenden Sensorsignals. Die Verzögerungszeit kann auch Totzeiten umfassen, welche bei einem Einlesen der Sensorsignale über eine Datenverbindung, beispielsweise über eine Feldbusverbindung, auftreten.

Die Überwachungsumgebung kann dazu eingerichtet sein, die Ausführungsdauer durch eine Überprüfung eines Füllstands einer Ereignis-Warteschlange der Ausführungsumgebung zu bestimmen. Dabei kann die Ausführungsumgebung bzw. das Ausführungsmodul für jede Ereigniskette bzw. für jedes Anfangsereignis eine separate Warteschlange verwalten. Das Ende der Ausführungsdauer ist dann erreicht, wenn die Warteschlange leer ist.

Die Ausführungsumgebung bzw. das Ausführungsmodul kann dazu ausgebildet sein, eine ereignisgesteuerte Zeitablaufsteuerung (*event triggered scheduling*) auszuführen. Die Ausführungsumgebung kann auch dazu ausgebildet sein, eine verfügbare Rechenleistung der speicherprogrammierbaren Steuerung nach vorgegebenen Kriterien auf die einzelnen Funktionsmodule des Steuerprogramms zu verteilen, beispielsweise gleichmäßig (*fair scheduling*)*.* Die Ausführungsumgebung kann hierzu eine zyklische Zeitablaufsteuerung implementieren. Beispielsweise kann die Ausführungsumgebung alle Instanzen von Funktionsmodulen zyklisch auf ausstehende Aktivierungsereignisse abfragen (*cyclic scan approach*) und ausstehende Aktivierungsereignisse gemäß einer vorgegebenen Reihenfolge abarbeiten.

Die Ausführungsumgebung bzw. das Ausführungsmodul kann also dazu eingerichtet sein, für die einzelnen Funktionsmodule vorliegende Aktivierungsereignisse zyklisch abzuarbeiten. Dabei kann das Überwachungsmodul dazu eingerichtet sein, die Ausführungsdauer dadurch zu bestimmen, dass das Überwachungsmodul am Ende jedes Zyklus überprüft, ob alle durch die Aktivierungsereignisse des betreffenden Zyklus ausgelösten Funktionsmodule ausgeführt worden sind. Ein Überschreiten der vorbestimmten Zeitdauer kann dann beispielsweise dadurch festgestellt werden, dass nach einem Beenden eines Abarbeitungszyklus noch ausstehende, unbearbeitete Aktivierungsereignisse des beendeten Abarbeitungszyklus vorhanden sind. Beispielsweise kann das Überwachungsmodul dazu ausgebildet sein, nach jedem Abarbeitungszyklus die ausstehenden Aktivierungsereignisse der einzelnen Funktionsmodule der Ereigniskette zu aggregieren.

Die Ausführungsumgebung bzw. das Ausführungsmodul kann dazu ausgebildet sein, die einzelnen Aktivierungsereignisse jeweils einem vorbestimmten, beispielsweise dem aktuellen, Abarbeitungszyklus zuzuweisen, beispielsweise mittels den Funktionsmodulen jeweils zugeordneten Warteschlangen und/oder mittels Markern. Die einzelnen Warteschlangen bzw. Marker können dabei jeweils lediglich Aktivierungsereignisse eines einzelnen Funktionsmoduls enthalten bzw. anzeigen.

Das Überwachungsmodul kann dazu eingerichtet ist, die Ausführungsdauer einmalig nach Ausführung eines letzten Funktionsmoduls der Ereigniskette auf das Überschreiten der vorgegebenen Zeitdauer zu überprüfen. Dies ermöglicht eine ressourcenschonende Überwachung der Ausführungsdauer.

Das Überwachungsmodul kann auch dazu eingerichtet sein, die Ausführungsdauer jeweils nach Ausführung der den einzelnen Aktivierungsereignissen der Ereigniskette zugeordneten Funktionsmodule auf das Überschreiten der vorgegebenen Zeitdauer zu überprüfen. Dadurch kann bereits während der Abarbeitung der Ereigniskette zeitnah ein Überschreiten der vorgegebenen Zeitdauer festgestellt und eine zugeordnete Überschreitungsreaktion eingeleitet werden. Zugleich wird der Rechenaufwand für die Überwachung der Ausführungsdauer gering gehalten.

Das Überwachungsmodul kann beispielsweise dazu eingerichtet sein, die Ausführungsdauer periodisch auf das Überschreiten der vorgegebenen Zeitdauer zu überprüfen.

Das Überwachungsmodul kann beispielsweise parallel zu dem Ausführungsmodul ausgeführt werden, beispielsweise als eine separate Task. Das Überwachungsmodul kann auch einen Zeitgeber, etwa einen Hardware-Zeitgeber, umfassen, welcher parallel zu dem Ausführungsmodul ausgeführt wird. Der Zeitgeber kann einen Interrupt erzeugt, sobald er abläuft.

Beispielsweise kann der Zeitgeber mit der vorgegebenen Zeitdauer initialisiert werden und zu Beginn der Ausführung der Ereigniskette gestartet, sowie zum Ende der Ausführung der Ereigniskette beendet werden. Das Überwachungsmodul kann dann das Überschreiten der vorgegebenen Zeitdauer dadurch feststellen, dass der Zeitgeber während der Ausführung der Ereigniskette abläuft.

Der Zeitgeber kann auch mit einer Periodendauer initialisiert werden, nach der überprüft werden soll, ob bereits alle Funktionsmodule der Ereigniskette ausgeführt wurden und ob die vorgegebene Zeitdauer bereits überschritten wurde. Der Zeitgeber kann zu Beginn der Ausführung der Ereigniskette gestartet werden. Stellt das Überwachungsmodul nach Ablauf des Zeitgebers fest, dass noch nicht alle Funktionsmodule der Ereigniskette ausgeführt wurden, die vorgegebene Zeitdauer aber auch noch nicht überschritten wurde, so kann der Zeitgeber erneut mit der Periodendauer initialisiert und gestartet werden.

Die Ausführungsumgebung kann auch ein Statistikmodul umfassen, das dazu eingerichtet ist, die verstrichene Ausführungsdauer statistisch auszuwerten, beispielsweise jeweils nach Ausführung der einzelnen Funktionsmodule. Beispielsweise kann das Statistikmodul eine statistische Größe, etwa ein Minimum und/oder ein Maximum und/oder einen Mittelwert, eines Alters einzelner Aktivierungsereignisse bei deren Abarbeitung bestimmen. Mittels eines derartigen Statistikmoduls können Verzögerungen, die eine Überschreitung der vorgegebenen Zeitdauer auslösen, bei der Abarbeitung der Ereigniskette einfach lokalisiert werden.

Das Alter der einzelnen Aktivierungsereignisse kann eine Zeitspanne sein, die seit dem Beginn der Ausführungsdauer verstrichen ist. Das Alter der einzelnen Aktivierungsereignisse kann beispielsweise bei einer Bereitstellung des betreffenden Aktivierungsereignisses an einem Ereignisausgang eines vorangehenden Funktionsmoduls und/oder bei einem Eingang des betreffenden Aktivierungsereignisses an einem Ereigniseingang des betreffenden Funktionsmoduls und/oder bei einer Abarbeitung des betreffenden Aktivierungsereignisses durch einen Ausführungsalgorithmus des betreffenden Funktionsmoduls berechnet werden. Das Alter der einzelnen Aktivierungsereignisse kann beispielsweise anhand mindestens eines den Beginn der Ausführungsdauer anzeigenden Zeitstempels berechnet werden.

Bei einer Ausführungsform der Ausführungsumgebung bildet ein erstes Aktivierungsereignis der Ereigniskette ein bei einer Aktivierung einer externen Eingangsschnittstelle der Ausführungsumgebung erzeugtes Anfangsereignis und/oder ein letztes der nacheinander auszuführenden Funktionsmodule bildet ein Abschlussmodul zum Bewirken einer Systemreaktion. Als Ausführungsdauer kann damit eine Reaktionszeit zwischen der Aktivierung der Eingangsschnittstelle und der auf Grundlage der Aktivierung der Eingangsschnittstelle erfolgten Systemreaktion überwacht werden. Dies ermöglicht eine effiziente Überwachung der Reaktionszeiten auf über die Eingangsschnittstelle empfangene Eingangssignale.

Die Systemreaktion kann beispielsweise ein Aktivieren einer externen Ausgabeschnittstelle der Ausführungsumgebung umfassen. Alternativ oder zusätzlich kann die Systemreaktion auch eine Änderung eines internen Zustandes der Ausführungsumgebung, beispielsweise eines innerhalb der Ausführungsumgebung verwalteten Objektes, umfassen. Die Systemreaktion kann alternativ oder zusätzlich auch ein Abspeichern eines Datenwertes zur weiteren Verwendung umfassen.

Die einzelnen Ereignisketten des Steuerprogramms können jeweils derart definiert sein, dass die Anfangsmodule der einzelnen Ereignisketten jeweils durch eine Aktivierung einer externen Eingangsschnittstelle der Ausführungsumgebung aktiviert werden und die Abschlussmodule der einzelnen Ereignisketten jeweils eine Systemreaktion der Ausführungsumgebung auslösen. Beispielsweise kann für jede Kombination aus einem derartigen Anfangsmodul und einem derartigen Abschlussmodul eine eigene Ereigniskette definiert sein.

Gemäß einer Ausführungsform ist die Ausführungsumgebung dazu eingerichtet, einen den Beginn der Ausführungsdauer anzeigenden Zeitstempel zu erzeugen, und das Überwachungsmodul ist dazu eingerichtet, die Ausführungsdauer durch einen Vergleich des Zeitstempels mit einer aktuellen Zeit zu bestimmen. Ein derartiger Zeitstempel ermöglicht es auf einfache Art und Weise, eine bereits verstrichene Ausführungsdauer zu einem beliebigen nachfolgenden Zeitpunkt zu bestimmen. Derartige Zeitstempel ermöglichen es zudem, die Ausführungsdauer auch dann zuverlässig zu bestimmen, wenn die Aktivierungsereignisse der Ereigniskette in mehreren unterschiedlichen Teilumgebungen der Ausführungsumgebung abgearbeitet werden, beispielsweise durch ein Übertragen der Zeitstempel über Ereignisverbindungen zwischen den einzelnen Teilmodulen der Ausführungsumgebung.

Der Zeitstempel kann beispielsweise den Zeitpunkt angeben, zu dem mit der Ausführung des Anfangsmoduls der Ereigniskette begonnen wird. Alternativ oder zusätzlich kann der Zeitstempel auch den Zeitpunkt angeben, zu dem das Anfangsereignis erstellt wird. Dadurch können Verzögerungen zwischen der Erstellung des Anfangsereignisses und der Ausführung des Anfangsmoduls bei der Überprüfung der Ausführungsdauer berücksichtigt werden.

Der Zeitstempel kann auch die zusätzliche Verzögerungszeit vor Erstellung des Anfangsereignisses berücksichtigen. Die Verzögerungszeit kann eine der Erstellung des Anfangsereignisses vorangehende Verzögerung aufgrund einer indeterministischen Datenverarbeitung und/oder eines indeterministischen Datentransfers, etwa eines indeterministischen Datentransfers eines Sensorsignals, umfassen. Insbesondere kann die Verzögerungszeit die Totzeit für die Datenübertragung von Sensorsignalen über ein Bussystem umfassen.

Das Überwachungsmodul kann dazu eingerichtet sein, die Ausführungsdauer jeweils durch einen Vergleich der aktuellen Zeit mit dem Zeitstempel des Aktivierungsereignisses des jeweilig ausgeführten Funktionsmoduls zu überprüfen. Diese Überprüfung kann beispielsweise jeweils einmalig nach Ausführung der einzelnen Funktionsmodule erfolgen oder auch während ihrer Ausführung. Das Überwachungsmodul kann dazu eingerichtet sein, den Zeitstempel jeweils ausschließlich nach Ausführung der einzelnen Funktionsmodule der Ereigniskette mit der aktuellen Zeit zu vergleichen. Das Überwachungsmodul kann den Zeitstempel auch während der Ausführung der einzelnen Funktionsmodule der Ereigniskette mit der aktuellen Zeit vergleichen, beispielsweise mehrmalig oder periodisch.

Die Ausführungsumgebung kann beispielsweise dazu ausgebildet sein, allen Aktivierungsereignissen der Ereigniskette den gleichen Zeitstempel zuzuordnen.

Gemäß einer Ausführungsform ist die Ausführungsumgebung dazu eingerichtet, den Zeitstempel zunächst einem die Ausführung eines ersten Funktionsmoduls auslösenden Anfangsereignis der Ereigniskette zuzuordnen. Bei der Ausführung der einzelnen Funktionsmodule werden jeweils Aktivierungsereignisse für nachfolgend auszuführende Funktionsmodule erstellt und den Aktivierungsereignissen der nachfolgend auszuführenden Funktionsmodule wird der Zeitstempel des Aktivierungsereignisses des jeweilig ausgeführten Funktionsmoduls zugeordnet. Dadurch wird es ermöglicht, den Zeitstempel während der Laufzeit des Steuerprogramms iterativ allen Aktivierungsereignissen der Ereigniskette zuzuweisen.

Die Ausführungsumgebung kann den Zeitstempel beispielsweise dem Anfangsereignis während der Laufzeit des Steuerprogramms und/oder bei dessen Erstellung zuordnen. Anschließend kann die Ausführungsumgebung den Zeitstempel auch allen nachfolgend auf Grundlage des Anfangsereignisses erstellten Aktivierungsereignissen der Ereigniskette während der Laufzeit des Steuerprogramms und/oder bei deren jeweiliger Erstellung zuordnen, etwa durch ein Kopieren des Zeitstempels des jeweilig ausgeführten Funktionsmoduls. Die Aktivierungsereignisse für nachfolgend auszuführende Funktionsmodule können jeweils während oder am Ende der Ausführung der einzelnen Funktionsmodule erzeugt werden.

Gemäß einer Ausführungsform umfasst die Ausführungsumgebung zur Ausführung der Funktionsmodule mehrere getrennt voneinander ausführbare Teilumgebungen, wobei die Teilumgebungen auf getrennten Ausführungsressourcen der Steuerung ausführbar sind. Die Ereigniskette umfasst ein durch ein Anfangsereignis der Ereigniskette ausgelöstes und in einer ersten Teilumgebung ausgeführtes erstes Funktionsmodul und ein durch ein zeitlich nachfolgendes Folgeereignis der Ereigniskette ausgelöstes und in einer zweiten Teilumgebung ausgeführtes zweites Funktionsmodul. Außerdem umfasst das Überwachungsmodul ein erstes Teilmodul und ein zweites Teilmodul, wobei das erste Teilmodul dazu eingerichtet ist, die Ausführungsdauer in der ersten Teilumgebung zu überwachen und wobei das zweite Teilmodul dazu eingerichtet ist, die Ausführungsdauer in der zweiten Teilumgebung zu überwachen.

Aufgrund der Teilmodule des Überwachungsmoduls ist es möglich, die Ausführungsdauer auch ressourcenübergreifend auf ein Überschreiten der vorgegebenen Zeitdauer zu überwachen. Die Teilmodule können dabei über eine Kommunikationsverbindung miteinander verbunden sein, wobei über die Kommunikationsverbindung Informationen zur Bestimmung der bereits verstrichenen Ausführungsdauer ausgetauscht werden. Beispielsweise kann über die Kommunikationsverbindung eine Information über die während der Ausführung in der ersten Teilumgebung verstrichene Ausführungsdauer von dem ersten Teilmodul zu dem zweiten Teilmodul übertragen werden. Die Kommunikationsverbindung kann beispielsweise über ein Bussystem, etwa ein Feldbussystem, zwischen der ersten und zweiten Ausführungsressource realisiert sein.

Die übertragene Information kann beispielsweise direkt eine bereits während der Ausführung in der ersten Teilumgebung verstrichene Teilausführungsdauer umfassen oder aus der Teilausführungsdauer bestehen. Die zweite Teilumgebung kann die Teilausführungsdauer dann bei der Überwachung der Ausführungsdauer berücksichtigen, beispielsweise indem sie die Teilausführungsdauer zu einer in der zweiten Teilumgebung bestimmten weiteren Teilausführungsdauer addiert.

Die übertragene Information kann einen Zeitpunkt des Beginns der Ausführungsdauer umfassen oder aus diesem Zeitpunkt bestehen. Beispielsweise kann die übertragene Information einen den Beginn der Ausführungsdauer enthaltenen Zeitstempel umfassen oder aus einem derartigen Zeitstempel bestehen. Beispielsweise kann der Zeitstempel von der ersten zu der zweiten Ausführungsumgebung übertragen werden, etwa über eine die erste und zweite Teilumgebung verbindende Ereignisverbindung. In der zweiten Teilumgebung kann der Zeitstempel dann dem ersten innerhalb der zweiten Teilumgebung erstellten Aktivierungsereignis der Ereigniskette zugewiesen werden. Zusätzlich kann der Zeitstempel auch allen weiteren auf der zweiten Ausführungsumgebung erstellten Aktivierungsereignissen zugewiesen werden. Ist die zweite Teilumgebung dazu ausgebildet, die Ausführungsdauer anhand von den einzelnen Aktivierungsereignissen zugeordneten Zeitstempeln zu bestimmen, so kann die Teilausführungsdauer bei der Erstellung des Zeitstempels des Aktivierungsereignisses des ersten in der zweiten Teilumgebung auszuführenden Funktionsmoduls berücksichtigt werden.

Gemäß einer Ausführungsform ist die Ausführungsumgebung dazu eingerichtet, einen den Beginn der überwachten Ausführungsdauer anzeigenden Zeitstempel von der ersten Teilumgebung über eine Kommunikationsverbindung zu der zweiten Teilumgebung zu übertragen. Dadurch kann das zweite Teilmodul die Ausführungsdauer auf einfache Art und Weise dadurch bestimmen, dass der übertragene Zeitstempel mit der aktuellen Zeit verglichen wird.

Insofern stellt der übertragene Zeitstempel die vorgenannte Information zur Bestimmung der bereits während der Ausführung in der ersten Teilumgebung verstrichenen Ausführungsdauer dar. Zur Bestimmung der aktuellen Zeit können die erste und zweite Teilumgebung miteinander synchronisierte Zeitbasen umfassen.

Gemäß einer Ausführungsform umfasst die Ausführungsumgebung einen Kommunikationskanal zwischen der ersten und der zweiten Teilumgebung, wobei die Ausführungsumgebung dazu eingerichtet ist, über den Kommunikationskanal eine durch das zweite Teilmodul festgestellte Überschreitung der vorgegebenen Zeitdauer an das erste Teilmodul zu übermitteln. Dadurch wird es auch dem ersten Teilmodul ermöglicht, eine durch die Überschreitung der vorgegebenen Zeitdauer ausgelöste Überschreitungsreaktion auszulösen.

Beispielsweise können alle Geräte, welche Funktionsmodule der Ereigniskette ausführen, eine Überschreitungsreaktion ausführen, insbesondere bei auf unterschiedlichen Geräten realisierten Teilmodulen.

Der Kommunikationskanal zur Übermittlung der festgestellten Überschreitung der vorgegebenen Zeitdauer kann auch als ein Überschreitungskanal bezeichnet werden. Der Überschreitungskanal kann als bidirektionaler Kommunikationskanal zwischen den beiden Teilumgebungen ausgeführt sein.

Neben der ersten und zweiten Teilumgebung kann die Ausführungsumgebung eine dritte Teilumgebung umfassen und das Überwachungsmodul kann ein drittes Teilmodul umfassen. Die dritte Teilumgebung und das dritte Teilmodul können auf einer eigenen Ausführungsressource der Steuerung ausführbar sein bzw. ausgeführt werden. Das Steuerprogramm kann mehrere nacheinander auszuführende weitere Funktionsmodule umfassen, welche eine weitere Ereigniskette bilden. Ein erstes weiteres Funktionsmodul der weiteren Ereigniskette kann dabei in der ersten Teilumgebung und ein zweites weiteres Funktionsmodul kann dabei in der dritten Teilumgebung ausgeführt werden.

Die erste Teilumgebung und die dritte Teilumgebung können über einen weiteren Kommunikationskanal miteinander verbunden sein. Die Ausführungsumgebung kann dazu eingerichtet sein, über den weiteren Kommunikationskanal die durch das zweite Teilmodul festgestellte und an das erste Teilmodul über den Kommunikationskanal übertragene Überschreitung der vorgegebenen Zeitdauer an das dritte Teilmodul zu übertragen. Ein Empfangen der über den weiteren Kommunikationskanal übertragenen Überschreitung der vorgegebenen Zeitdauer kann dann eine Überschreitungsreaktion des dritten Teilmoduls auslösen.

Generell kann in Fällen, in denen die für die Ausführung der Ereigniskette vorgegebene Zeitdauer überschritten wird, in allen Ausführungsressourcen, welche eines der Funktionsmodule der Ereigniskette ausführen, eine Überschreitungsreaktion ausgelöst werden. Eine Überschreibungsreaktion kann zusätzlich auch in all denjenigen Ausführungsressourcen ausgelöst werden, die Funktionsmodule von weiteren Ereignisketten ausführen, die der Ereigniskette zugeordnete sind. Die der Ereigniskette zugeordneten weiteren Ereignisketten können beispielsweise alle Ereignisketten sein, die mindestens ein Funktionsmodul enthalten, das in der gleichen Teilumgebung ausgeführt wird wie eines der Funktionsmodule der Ereigniskette.

Die der Ereigniskette zugeordneten weiteren Ereignisketten können auch alle Ereignisketten sein, die der Steuerung eines Anlagenteils und/oder einer Subfunktion einer durch das Steuerprogramm gesteuerten Anlage dienen. Die der Ereigniskette zugeordneten weiteren Ereignisketten können alternativ oder zusätzlich auch alle Ereignisketten umfassen, die mit einer vorgegebenen Gruppe von Peripheriegeräten der Anlage, beispielsweise einer vorgegebenen Gruppe von Sensoren und/oder Aktoren, etwa Antrieben, Motoren oder dergleichen, und/oder IO Kanälen, verknüpft sind, etwa der Auswertung und/oder Ansteuerung der Gruppe von Peripheriegeräte dienen. Dadurch kann eine Ausführung von Überschreitungsreaktionen auf die Ereigniskette und alle der Ereigniskette zugeordneten weiteren Ereignisketten und damit beispielsweise auf einen Anlagenteil bzw. eine Subfunktion der gesteuerten Anlage beschränkt werden.

Für einzelne der Ereigniskette zugeordnete weitere Ereignisketten können unterschiedliche Überschreitungsreaktionen der die betreffenden weiteren Ereignisketten ausführenden Ausführungsressourcen ausgelöst werden. Beispielsweise kann für einen Teil der weiteren Ereignisketten ein Versetzen in einen sicheren Zustand als Überschreitungsreaktion ausgeführt werden, für einen anderen Teil der weiteren Ereignisketten ein durch ein Anwenderprogramm gesteuertes Stillsetzen. Hierzu können in einer Programmierumgebung zur Erstellung des Steuerprogramms zugehörige Ereignisketten, etwa Ereignisketten einzelner Anlagenteile, definierbar sein. Außerdem können Beziehungen zwischen zugehörigen Ereignisketten definierbar sein.

Zur Aktivierung der in der zweiten Teilumgebung auszuführenden Funktionsmodule kann die erste Teilumgebung mit der zweiten Teilumgebung über einen Ereigniskanal verbunden sein. Dabei wird über den Ereigniskanal nach Ausführung eines letzten Funktionsmoduls in der ersten Teilumgebung ein Aktivierungsereignis zur Aktivierung eines ersten Funktionsmoduls in der zweiten Teilumgebung übertragen. Zusammen mit dem Aktivierungsereignis kann auch ein zugeordneter Zeitstempel über den Ereigniskanal übertragen werden.

Der Ereigniskanal und/oder der Überschreitungskanal können beispielsweise über eine die erste Ausführungsressource mit der zweiten Ausführungsressource verbindende Kommunikationsverbindung, beispielsweise ein Bussystem, realisiert sein. Die durch das zweite Teilmodul festgestellte Überschreitung der vorgegebenen Zeitdauer kann über den Überschreitungskanal mittels einer Überschreitungsmeldung an das erste Teilmodul übermittelt werden.

Zwischen den beiden Teilumgebungen können mehrere Ereigniskanäle zur Übertragung mehrerer Aktivierungsereignisse, beispielsweise zur Übertragung von Aktivierungsereignissen mehrerer Ereignisketten, eingerichtet sein. Entsprechend können zwischen den beiden Teilumgebungen auch mehrere Überschreitungskanäle eingerichtet sein. Alternativ kann zwischen den beiden Teilumgebungen auch nur ein einzelner Überschreitungskanal eingerichtet sein, beispielsweise dann, wenn die erste Teilumgebung bei allen Überschreitungen der für die Ausführung der einzelnen Ereignisketten jeweilig vorgegebenen Zeitdauern jeweils die gleiche Überschreitungsreaktion auslöst.

Eine erste Überschreitungsreaktion, welche die erste Teilumgebung bei einer durch die zweite Teilumgebung festgestellten Überschreitung der vorgegebenen Zeitdauer ausführt, kann sich von einer zweiten Überschreitungsreaktion, welche die zweite Teilumgebung bei der Feststellung der Überschreitung der vorgegebenen Zeitdauer ausführt, unterscheiden.

Generell können die ausgeführten Überschreitungsreaktionen bei allen Ausführungsformen der Ausführungsumgebung durch einen Benutzer konfigurierbar sein. Die Überschreitungsreaktionen können beispielsweise die Ausgabe eines Ausgangssignals umfassen. Die Überschreitungsreaktionen können auch eine Ausführung eines separaten Steuerprogramms auslösen oder eine Eingabe an ein parallel ausgeführtes weiteres Steuerprogramm, beispielsweise an ein nicht sicherheitsgerichtetes Standardsteuerprogramm. Die Überschreitungsreaktionen können jeweils eine Überführung einer durch die Steuerung gesteuerten Maschine in einen sicheren Zustand bewirken.

Die Überschreitungsreaktionen können zudem einen Abbruch der Ausführung des Steuerprogramms in zumindest einer Teilumgebung der Ausführungsumgebung oder auch in allen Teilumgebungen der Ausführungsumgebung umfassen. Bei dem Überschreiten der vorgegebenen Zeitdauer kann das Steuerprogramm jedoch auch in zumindest einer Teilumgebung oder in allen Teilumgebungen weiter ausgeführt werden.

Über den Überschreitungskanal kann zusätzlich zu der Überschreitungsmeldung auch eine Diagnoseinformation von der zweiten Teilumgebung zu der ersten Teilumgebung übermittelt werden. Die Diagnoseinformation kann beispielsweise eine Kennung der Teilumgebung, in der die Überschreitung der vorgegebenen Zeitdauer festgestellt wurde, umfassen. Bei der Kennung kann es sich beispielsweise auch um eine Kennung der Ausführungsressource bzw. eines Teilgeräts der Steuerung, welches die Teilumgebung ausführt, handeln. In Fällen, in denen die erste Teilumgebung das durch die zweite Teilumgebung festgestellte Überschreiten der vorgegebenen Zeitdauer an weitere Teilumgebungen weiterleitet, kann die erste Teilumgebung die Kennung zusammen mit der Überschreitungsmeldung weiterleiten. In diesen Fällen kann auch in den weiteren Teilumgebungen ermittelt werden, in welcher Teilumgebung das Überschreiten der vorgegebenen Zeitdauer festgestellt wurde.

Die einzelnen Teilumgebungen können dazu ausgebildet sein, die übermittelte Kennung auszuwerten und eine Überschreitungsreaktion in Abhängigkeit von der übermittelten Kennung auszuführen, beispielsweise unterschiedliche Überschreitungsreaktionen bei unterschiedlichen übermittelten Kennungen auszuführen.

Die Diagnoseinformation kann zusätzlich auch eine Ereigniskennung umfassen, wobei die Ereigniskennung dasjenige Aktivierungsereignis angibt, bei dessen Ausführung das Überschreiten der vorgegebenen Zeitdauer festgestellt wurde.

Die einzelnen Teilmodule können alternativ oder zusätzlich auch dazu ausgebildet sein, die Diagnoseinformation direkt zu hinterlegen, beispielsweise auf dem das jeweilige Teilmodul ausführenden Teilgerät oder auf einem über eine Datenverbindung an die einzelnen Teilgeräte angebundenen Zentralgerät.

Gemäß einer Ausführungsform umfasst die Ausführungsumgebung eine mit mehreren weiteren Teilumgebungen über Kommunikationskanäle verbundene Teilumgebung, wobei die mit den mehreren weiteren Teilumgebungen verbundene Teilumgebung dazu eingerichtet ist, eine über einen der Kommunikationskanäle empfangene Überschreitung der vorgegebenen Zeitdauer über die übrigen Kommunikationskanäle an alle übrigen über die Kommunikationskanäle verbundenen Teilumgebungen zu übermitteln. Dies ermöglicht eine einfache Weiterleitung der Überschreitungsmeldungen nach dem peer-to-peer Prinzip.

Die mit den mehreren weiteren Teilumgebungen verbundene Teilumgebung kann dazu eingerichtet sein, Informationen über den Kommunikationskanal, über den die Überschreitung der vorgegebenen Zeitdauer empfangen wurde, zu speichern, beispielsweise um sie zu einem späteren Zeitpunkt einem Auswertemodul der Ausführungsumgebung zur Verfügung stellen zu können. Die mit den mehreren weiteren Teilumgebungen verbundene Teilumgebung kann dazu eingerichtet sein, die Diagnoseinformation an alle übrigen über die Kommunikationskanäle verbundene Teilumgebungen zu übermitteln. Damit werden nicht nur die Überschreitungsmeldungen, sondern auch die Diagnoseinformationen nach dem peer-to-peer-Prinzip verteilt.

Bei einer Ausführungsform der Ausführungsumgebung umfasst das Steuerprogramm mindestens zwei Ereignisketten, die Aktivierungsereignisse zur Aktivierung mindestens eines gemeinsamen Funktionsmoduls umfassen, wobei das Steuerprogramm dazu eingerichtet ist, nach Ausführung des gemeinsamen Funktionsmoduls ein erstes Aktivierungsereignis der ersten Ereigniskette und, alternativ oder kumulativ, ein zweites Aktivierungsereignis der zweiten Ereigniskette zu erzeugen. Das Überwachungsmodul ist dann dazu eingerichtet, die Ausführungsdauer der Funktionsmodule der ersten Ereigniskette auf das Überschreiten der vorgegebenen Zeitdauer zu überprüfen und die Ausführungsdauer der Funktionsmodule der zweiten Ereigniskette auf ein Überschreiten einer weiteren vorgegebenen Zeitdauer zu überprüfen oder keine Überprüfung der Ausführungsdauer der Funktionsmodule der zweiten Ereigniskette durchzuführen.

Indem für alle ab der Ausführung des gemeinsamen Funktionsmoduls erzeugten Aktivierungsereignisse der ersten Ereigniskette und für alle ab der Ausführung des gemeinsamen Funktionsmoduls erzeugten Aktivierungsereignisse der zweiten Ereigniskette das Überschreiten einer vorgegebenen Zeitdauer auf unterschiedliche Weise, insbesondere anhand unterschiedlicher vorgegebener Zeitdauern, überwacht wird, kann die Überwachung der Ausführungsdauer der einzelnen Ereignisketten flexibel angepasst werden, beispielsweise an unterschiedliche Prioritäten oder Sicherheitserfordernisse bei der Ausführung der einzelnen Ereignisketten.

Dem ersten Aktivierungsereignis und dem zweiten Aktivierungsereignis können beispielsweise bei ihrer Erzeugung während der Ausführung des Steuerprogramms unterschiedliche Prioritäten oder vorgegebene Zeitdauern zugewiesen werden, beispielsweise in Form einer dem betreffenden Aktivierungsereignis zugeordneten Zusatzinformation bzw. Attributs. Die Prioritäten bzw. Zeitdauern können dann für alle auf Grundlage des ersten Aktivierungsereignisses bzw. auf Grundlage des zweiten Aktivierungsereignisses erzeugten Folgeereignisse übernommen werden. Die Zugehörigkeit der durch das gemeinsame Funktionsmodul erzeugten Aktivierungsereignisse zu der ersten und zweiten Ereigniskette bzw. die Priorität oder vorgegebene Zeitdauer des ersten und zweiten Aktivierungsereignisses können beispielsweise in dem Steuerprogramm hinterlegt sein und beispielsweise während der Erstellung des Steuerprogramms zugewiesen worden sein.

Das gemeinsame Funktionsmodul kann beispielsweise einen Algorithmus oder eine logische Verknüpfung umfassen, welche eine Zwischeninformation erzeugen. Diese Zwischeninformation kann dann von den Funktionsmodulen der ersten Ereigniskette zur zeitkritischen und/oder sicherheitskritischen Ansteuerung eines Aktors verwendet werden, während die Funktionsmodule der zweiten Ereigniskette die Zwischeninformation im Rahmen nicht-zeitkritischer und/oder nicht-sicherheitskritischer Funktionen weiterverarbeiten, beispielsweise zur späteren Analyse abspeichern. In diesen Fällen kann die für die erste Ereigniskette vorgegebene Zeitdauer anders sein als eine für die zweite Ereigniskette vorgegebenen Zeitdauer oder es kann lediglich die Ausführungsdauer der ersten Ereigniskette auf das Überschreiten einer vorgegebenen Zeitdauer überprüft werden, nicht jedoch die Ausführungsdauer der zweiten Ereigniskette.

Bei einer Ausführungsform der Ausführungsumgebung ist das Überwachungsmodul dazu eingerichtet, zu überprüfen, ob eine für die Ausführung mehrerer Funktionsmodule der Ereigniskette vorgegebene Gesamtzeitdauer überschritten wird. Die Gesamtzeitdauer kann auch für die Ausführung aller Funktionsmodule der Ereigniskette vorgegeben sein. Indem die Gesamtzeitdauer für die Ausführung mehrerer oder aller Funktionsmodule der Ereigniskette vorgegeben wird, kann eine Verzögerung bei der Ausführung einzelner Funktionsmodule durch eine rasche Ausführung anderer Funktionsmodule ausgeglichen werden, ohne dass vorzeitig eine Überschreitung der vorgegebenen Zeitdauer festgestellt werden würde.

Bei einer Ausführungsform der Ausführungsumgebung ist das Überwachungsmodul dazu eingerichtet, zu überprüfen, ob für die Ausführung einzelner Funktionsmodule der Ereigniskette vorgegebene Einzelzeitdauern überschritten werden. Dies ermöglicht es, frühzeitig eine drohende Überschreitung einer für die Ausführung aller Funktionsmodule der Ereigniskette zulässigen Gesamtzeitdauer festzustellen.

Dabei können für die Einzelzeitdauern von in unterschiedlichen Teilumgebungen der Ausführungsumgebung ausgeführten Funktionsmodulen unterschiedliche Einzelzeitdauern vorgebbar sein. Die Einzelzeitdauern können dabei jeweils einheitlich für alle in der jeweiligen gleichen Teilumgebung ausgeführten Funktionsmodule vorgebbar sein. Es kann aber auch individuell für jedes einzelne Funktionsmodule der Ereigniskette eine eigene Einzelzeitdauer vorgebbar sein. Für mindestens eine der unterschiedlichen Einzelzeitdauern, beispielsweise für jede einzelne Einzelzeitdauer, kann auch jeweils eine unbeschränkte Zeitdauer vorgebbar sein.

Das Überwachungsmodul kann dazu ausgebildet sein, eine Überschreitungsreaktion auszuführen, sobald das Überschreiten einer der Einzelzeitdauern feststellt wurde. Die Überschreitungsreaktion kann jeweils von der überschrittenen Einzelzeitdauer bzw. dem Funktionsmodul, dessen Einzelzeitdauer überschritten wurde, abhängen.

Dem Überwachungsmodul können einzelne Funktionsmodule vorgebbar sein, bei deren Ausführung das Überprüfen auf ein Überschreiten der zugeordneten vorgegebenen Einzelzeitdauer pausiert wird, beispielsweise während einer Initialisierung der Steuerung. Alternativ oder zusätzlich können auch Teilumgebungen vorgebbar sein, das Überprüfen der ausgeführten Funktionsmodule auf ein Überschreiten der zugeordneten vorgegebenen Einzelzeitdauern pausiert wird.

Bei einer Ausführungsform der Ausführungsumgebung ist das Überwachungsmodul dazu eingerichtet, Ausführungsdauern mehrerer Ereignisketten jeweils auf ein Überschreiten vorgegebener Zeitdauern zu überwachen, wobei die für die einzelnen Ereignisketten vorgegebenen Zeitdauern jeweils in Abhängigkeit von die einzelnen Ereignisketten auslösenden Anfangsereignissen vorgegeben sind. Dies ermöglicht es, bei der Vorgabe der Zeitdauern zwischen den einzelnen Anfangsereignissen zu differenzieren und beispielsweise zeitkritischen und/oder sicherheitskritischen Anfangsereignissen, etwa auf zeitkritischen und/oder sicherheitskritischen Sensorsignalen basierenden Anfangsereignissen, andere Zeitdauern, beispielsweise kürzere Zeitdauern, zuzuweisen als zeitunkritischen und/oder sicherheitsunkritischen Anfangsereignissen.

Bei einer Ausführungsform der Ausführungsumgebung ist das Überwachungsmodul dazu eingerichtet, bei einem Überschreiten der vorgegebenen Zeitdauer eine Überschreitungsreaktion auszulösen, beispielsweise eine Alarmmeldung und/oder eine Steuerreaktion, beispielsweise eine Steuerreaktion zur Überführung einer mittels des Steuerprogramms gesteuerten Maschine in einen sicheren Zustand.

Die Überschreitungsreaktion kann insbesondere eine Sicherheitsreaktion sein.

Das Überwachungsmodul kann dazu eingerichtet sein, die Ausführungsdauer der Ereigniskette auf das Überschreiten der vorgegebenen Zeitdauer und zusätzlich auf ein Überschreiten einer weiteren vorgegebenen Zeitdauer zu überwachen und bei dem Überschreiten der vorgegebenen Zeitdauer und bei dem Überschreiten der weiteren vorgegebenen Zeitdauer unterschiedliche Überschreitungsreaktionen auszulösen. Beispielsweise kann die weitere vorgegebene Zeitdauer kürzer sein als die vorgegebene Zeitdauer und eine bei einem Überschreiten der weiteren vorgegebenen Zeitdauer ausgelöste weitere Überschreitungsreaktion kann eine Vorabinformation darstellen, dass das Überschreiten der vorgegebenen Zeitdauer und eine daraufhin ausgelöste Überschreitungsreaktion droht.

Bei der weiteren Überschreitungsreaktion kann es sich beispielsweise um eine Warnmeldung handeln, beispielsweise um einen Alarm oder eine Diagnosemeldung, und bei der Überschreitungsreaktion kann es sich dann um eine Steuerreaktion handeln, etwa zum Überführen der mittels des Steuerprogramms gesteuerten Maschine in einen unkritischen und/oder kontrollierten und/oder sicheren Zustand.

Das Überwachungsmodul kann dazu eingerichtet ist, die Ausführung der Funktionsmodule durch das Ausführungsmodul zu unterbrechen, sobald die überwachte Ausführungsdauer die vorgegebene Zeitdauer überschreitet. In diesen Fällen kann das Ausführungsmodul anstelle der Funktionsmodule der Ereigniskette ein Überschreitungsprogramm zur Steuerung der Überschreitungsreaktion ausführen.

Bei einer Ausführungsform der Ausführungsumgebung ist das Überwachungsmodul dazu eingerichtet, die Ausführungsdauer jeweils nach Ausführung der den einzelnen Aktivierungsereignissen der Ereigniskette zugeordneten Funktionsmodulen auf das Überschreiten der vorgegebenen Zeitdauer zu überprüfen. Bei einer derartigen Ausgestaltung des Überwachungsmoduls wird die zur Überwachung der Ausführungsdauer benötigte Rechenleistung gegenüber einer beispielsweise kontinuierlichen Überwachung der Ausführungsdauer begrenzt. Die Ausführungsdauer kann jeweils ausschließlich nach Ausführung der den einzelnen Aktivierungsereignissen der Ereigniskette zugeordneten Funktionsmodulen auf das Überschreiten der vorgegebenen Zeitdauer überprüft werden.

Bei einer Weiterbildung der Ausführungsumgebung ist das Überwachungsmodul dazu eingerichtet, die Ausführungsdauer während der Ausführung der einzelnen Funktionsmodule der Ereigniskette auf das Überschreiten der vorgegebenen Zeitdauer zu überprüfen. Dies ermöglicht eine besonders zeitnahe Reaktion auf eine Überschreitung der vorgegebenen Zeitdauer.

Es wird ferner ein Verfahren zur Ausführung eines ereignisorientierten Steuerprogramms einer speicherprogrammierbaren Steuerung angegeben, wobei das Steuerprogramm mehrere nacheinander auszuführende Funktionsmodule umfasst und wobei die Funktionsmodule ereignisgesteuert bei Eintritt von den einzelnen Funktionsmodulen jeweils zugeordneten Aktivierungsereignissen ausgeführt werden. Dabei umfasst das Verfahren die folgenden Schritte:
- Bilden einer Ereigniskette aus den Aktivierungsereignissen der nacheinander auszuführenden Funktionsmodule;
- Überwachen einer Ausführungsdauer der Funktionsmodule der Ereigniskette;
- Überprüfen der Ausführungsdauer auf ein Überschreiten einer vorgegebenen Zeitdauer.

Das Verfahren kann ein computerimplementiertes Verfahren sein. Das Verfahren kann insbesondere mittels der angegebenen Ausführungsumgebung ausgeführt werden. Umgekehrt kann die Ausführungsumgebung eingerichtet sein, bei einer Ausführung auf einer Steuerung einzelne oder alle Schritte des angegebenen Verfahrens durchzuführen. Insofern beziehen sich alle Effekte und Weiterbildungen, die im Zusammenhang mit der Ausführungsumgebung offenbart werden, auch auf das angegebene Verfahren und umgekehrt.

Das Bilden der Ereigniskette aus den Aktivierungsereignissen kann beispielsweise bei einer Analyse des Steuerprogramms vor dessen Ausführung erfolgen. Die Analyse des Steuerprogramms kann beispielsweise mittels einer Programmierumgebung zur Erstellung des Steuerprogramms ausgeführt werden. Bei dem Bilden der Ereigniskette können alle Funktionsmodule, die beginnend mit einem Anfangsmodul der Reihe nach zur Ausführung eines Abschlussmoduls ausgeführt werden, bestimmt werden und die zugehörigen Aktivierungsereignisse in der Ereigniskette zusammengefasst werden. Analog kann für alle möglichen Kombinationen von Anfangsmodulen und Abschlussmodulen jeweils eine separate Ereigniskette gebildet werden.

Außerdem wird eine speicherprogrammierbare Steuerung mit einem Speichermodul angegeben, wobei in dem Speichermodul die angegebene Ausführungsumgebung zur Ausführung durch die Steuerung abgelegt ist. Die Steuerung kann mehrere Ausführungsressourcen bereitstellen. Dabei können die Ausführungsressourcen zumindest teilweise verteilt in unterschiedlichen Teilgeräten der Steuerung angeordnet sein. Die Teilgeräte können über eine Kommunikationsverbindung, etwa eine drahtlose und/oder kabelgebundene Verbindung miteinander verbunden sein. Die Kommunikationsverbindung kann beispielsweise ein Feldbussystem sein. Die Teilgeräte können jeweils eigene, getrennt voneinander ausgebildete Speichermodule umfassen und in den Speichermodulen können jeweils die von den betreffenden Teilgeräten auszuführenden Teilumgebungen der Ausführungsumgebung abgelegt sein.

Es wird ferner ein nicht-flüchtiges, computerlesbares Medium angegeben, auf dem Anweisungen zur Ausführung einzelner oder aller Schritte des angegebenen Verfahrens bzw. zur Realisierung der beschriebenen Ausführungsumgebung abgelegt sind. Das computerlesbare Medium kann beispielsweise als physikalisches Medium, etwa als CD oder DVD, oder als Datenspeicherort, welcher über eine Datenverbindung, beispielsweise das Internet, zugänglich ist, ausgebildet sein. Das Medium kann beispielsweise als online Software-Repository oder als Cloud-Datenspeicher ausgebildet sein.

Die Erfindung wird nachfolgend beispielhaft anhand von Figuren erläutert. Dabei zeigen in jeweils schematischer Darstellung:
- Fig. 1: eine Maschine mit einer Steuerung zur Ausführung eines ereignisgesteuerten Steuerprogramms;
- Fig. 2: Funktionsmodule des Steuerprogramms;
- Fig. 3: eine Ausführungsumgebung zur Ausführung des Steuerprogramms durch die Steuerung;
- Fig. 4: Ereignisketten des Steuerprogramms;
- Fig. 5: eine Übertragung einer Überschreitung einer vorgegebenen Zeitdauer zwischen Ausführungsressourcen der Steuerung;
- Fig. 6: Übertragungen weiterer Überschreitungen einer vorgegebenen Zeitdauer zwischen Ausführungsressourcen der Steuerung;
- Fig. 7: eine weitere Ausführungsform der Ausführungsumgebung;
- Fig. 8: eine weitere Ausführungsform der Ausführungsumgebung;
- Fig. 9: eine weitere Ausführungsform der Ausführungsumgebung;
- Fig. 10: eine weitere Ausführungsform der Ausführungsumgebung;
- Fig. 11: eine weitere Ausführungsform der Ausführungsumgebung;
- Fig. 12: eine weitere Ausführungsform der Ausführungsumgebung.

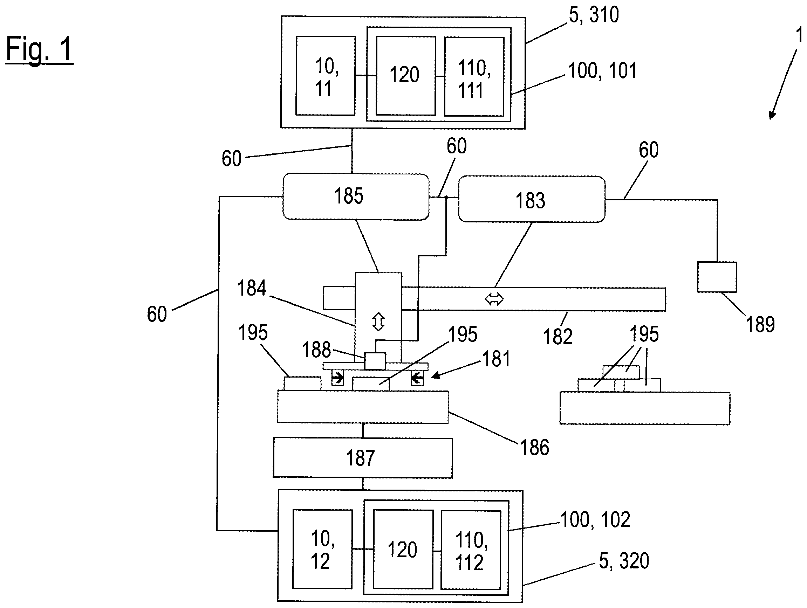

**Fig. 1** zeigt eine Maschine 1, welche beispielhaft zur Handhabung von Werkstücken 195 ausgebildet ist. Die Maschine 1 umfasst einen Förderer 186, auf welchem die Werkstücken 195 angeliefert werden, und einen Greifer 181, mittels dessen die Werkstücke 195 vom Förderer 186 aufgenommen und anschließend andernorts abgelegt werden. Zur Bewegung des Greifer 181 umfasst die Maschine 1 eine Transversalkinematik 182, welche von einem ersten Aktor 183 angetrieben wird, und eine von einem zweiten Aktor 185 angetriebene Höhenkinematik 184. Der Förderer 186 wird von einem dritten Aktor 187 angetrieben. Die Aktoren 183, 185,187 sind dabei jeweils als elektrische Antriebe ausgebildet.

Zusätzlich zu den Aktoren 183, 185, 187 umfasst die Maschine 1 einen sicherheitsgerichteten Sensor 188, welcher den Abstand des Greifer 181 zu den einzelnen Werkstücken 195 auf dem Förderer 186 misst, und einen weiteren, nicht sicherheitsgerichteten Sensor 189, welcher als Benutzerschnittstelle ausgebildet ist und über den Kenndaten der Werkstücke 195 vorgegeben werden können.

Die Maschine 1 umfasst außerdem eine mit den Aktoren 183, 185, 187 und den Sensoren 188, 189 über eine als Feldbus ausgebildete Kommunikationsverbindung 60 verbundene speicherprogrammierbare Steuerung 5. Die speicherprogrammierbare Steuerung 5 umfasst ein erstes Teilgerät 310 und ein zweites Teilgerät 320, welche getrennt voneinander an die Kommunikationsverbindung 60 angeschlossen sind. Über die Kommunikationsverbindung 60 werden Eingangssignale von den Sensoren 188, 189 zu den Teilgeräten 310, 320 der Steuerung 5 und Ausgangssignale von den Teilgeräten 310, 320 an die Aktoren 183, 185, 187 übertragen.

Die Steuerung 5 weist ein ereignisorientiertes Steuerprogramm 10 auf, wobei ein erstes Teilprogramm 11 des Steuerprogramms 10 in einem Speichermodul des ersten Teilgeräts 310 und ein zweites Teilprogramm 12 des Steuerprogramms 10 in einem Speichermodul des zweiten Teilgeräts 320 abgelegt ist. Das Steuerprogramm 10 umfasst alle Anweisungen zum Einlesen der Sensorsignale über die Kommunikationsverbindung 60, zur Erzeugung der Ausgangssignale mittels logischer Verknüpfung der eingelesenen Sensorsignale und zur Ausgabe der Ausgangssignale über die Kommunikationsverbindung 60.

Zur Ausführung des Steuerprogramms 10 umfasst die Steuerung 5 eine Ausführungsumgebung 100 mit einer auf dem ersten Teilgerät 310 ausgeführten ersten Teilumgebung 101 und einer auf dem zweiten Teilgerät 320 ausgeführten zweiten Teilumgebung 102. Die Teilumgebungen 101, 102 der Ausführungsumgebung 100 umfassen jeweils Ausführungsmodule 120 zur Ausführung des Steuerprogramms 10 und Teilmodule 111, 112 eines Überwachungsmoduls 110 zur Überwachung der Ausführungsdauer des Steuerprogramms 10 durch die speicherprogrammierbare Steuerung 5. Dabei ist ein erstes Teilmodul 111 des Überwachungsmoduls 110 Bestandteil der ersten Teilumgebung 101 und ein zweites Teilmodul 112 des Überwachungsmoduls 110 Bestandteil der zweiten Teilumgebung 102.

Bei der Ausführung des Steuerprogramms 10 muss sichergestellt sein, dass die Aktoren 183, 185 zur Bewegung des Greifers 181 innerhalb vorgegebener Zeitdauern auf ein über den sicherheitsgerichteten Sensor 188 eingelesenes Eingangssignal zur Anzeige einer Annäherung des Greifers 181 an die Werkstücke 195 reagiert. Andernfalls bestünde die Gefahr, dass der Greifer 181 unkontrolliert mit den Werkstücken 195 kollidiert und diese beschädigt. Insofern stellen die von dem sicherheitsgerichteten Sensor 188 bereitgestellten Eingangssignale sicherheitskritische Eingangssignale dar.

Dagegen werden die über den Sensor 189 eingelesenen Parameter der Werkstücke 195 lediglich dazu verwendet, die Bewegung des Greifers 181 optimal an die Massenträgheit der Werkstücke 195 anzupassen. Hierzu werden die eingelesenen Parameter bei der Ausführung des Steuerprogramms 10 zur Erstellung angepasster Ausgangssignale für die Aktoren 183, 185 verwendet. Die Erstellung der angepassten Ausgangssignale stellt einen nicht-sicherheitsgerichteten Teil des Steuerungsprogramms 10 dar, welcher keinen Zeitanforderungen unterliegt.

Das Überwachungsmodul 110 ist dazu eingerichtet, die Ausführungsdauer desjenigen Programmteils des Steuerprogramms 10, welcher die Reaktion des Greifers 181 auf die durch den sicherheitskritischen Sensor 188 bereitgestellten Eingangssignale steuert, auf ein Überschreiten einer vorgegebenen Zeitdauer zu überwachen und bei einem Überschreiten der vorgegebenen Zeitdauer als Überschreitungsreaktion eine Sicherheitsreaktion zur Überführung der Maschine 1 in einen sicheren Zustand, nämlich zum Stillsetzen des Greifers 181 und des Förderers 186 auszulösen. Ein derartiges Überschreiten der vorgegebenen Zeitdauer bei einer Reaktion auf Eingangssignale des Sensors 188 kann beispielsweise dann auftreten, wenn eine laufende Erstellung der angepassten Ausgangssignale auf Grundlage der Sensorsignale des Sensors 189 nicht rechtzeitig unterbrochen wird, beispielsweise aufgrund eines Programmierfehlers des Steuerprogramms 10.

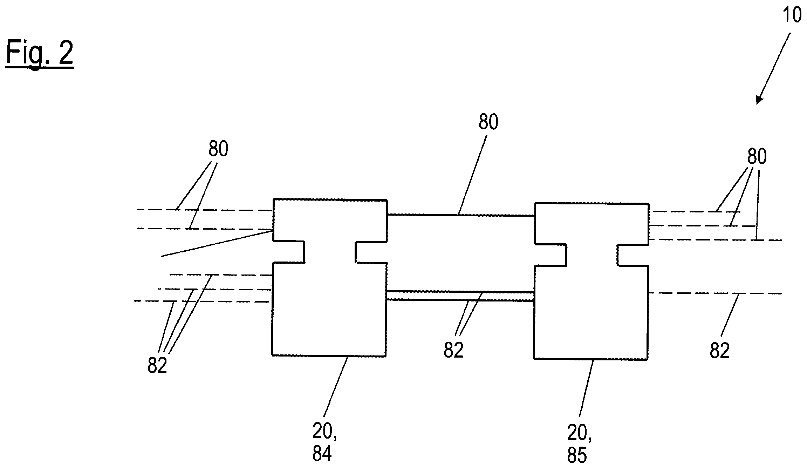

Das Steuerprogramm 10 ist gemäß den Vorgaben der Norm IEC 61499 ausgeführt und umfasst eine Mehrzahl von als Funktionsblöcke gemäß IEC 61499 ausgebildeten Funktionsmodulen. In **Fig. 2** sind beispielhaft zwei dieser Funktionsmodule 20 dargestellt. Die einzelnen Funktionsmodule 20 sind jeweils über Ereignisverbindungen 80 und Datenverbindungen 82 miteinander verbunden. Die einzelnen Ereignisverbindungen 80 verbinden dabei jeweils einen Ereignisausgang eines vorangehenden Funktionsmoduls 84 mit einem Ereigniseingang eines nachfolgenden Funktionsmoduls 85. Über die Ereigniseingänge empfangen die einzelnen Funktionsmodule 20 Aktivierungsereignisse, welche eine Ausführung der einzelnen Funktionsmodule 20 auslösen. Über die Ereignisausgänge stellen die einzelnen Funktionsmodule 20 ihrerseits Aktivierungsereignisse bereit, welche eine Ausführung nachfolgender Funktionsmodule 85 bewirken. Die für die Ausführung der einzelnen Funktionsmodule 20 benötigten Daten werden zwischen den Funktionsmodulen 20 über die Datenverbindungen 82 übertragen.

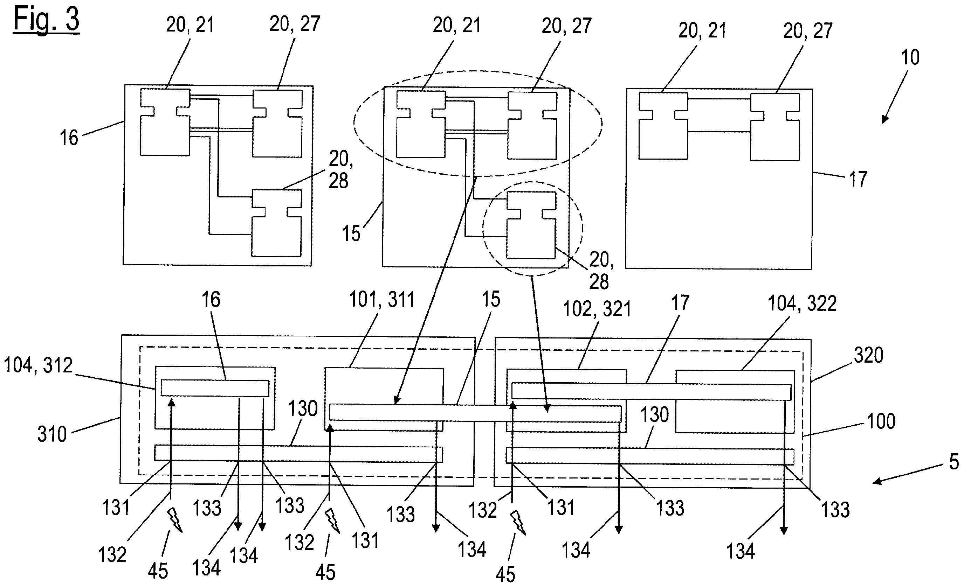

**Fig. 3** zeigt die Implementierung der Ausführungsumgebung 100 auf den Teilgeräten 310, 320 der speicherprogrammierbaren Steuerung 5. Zur Ausführung des Steuerprogramms 10 stellt das erste Teilgerät 310 eine erste Ausführungsressource 311 und eine zweite Ausführungsressource 312 bereit. Das zweite Teilgerät 320 stellt eine dritte Ausführungsressource 321 und eine vierte Ausführungsressource 322 bereit. Die Ausführungsumgebung 100 umfasst eine erste Teilumgebung 101, welche auf der ersten Ausführungsressource 311 ausgeführt wird, und eine zweite Teilumgebung 102, welche auf der dritten Ausführungsressource 321 ausgeführt wird. Auf der zweiten und vierten Ausführungsressource 312, 322 werden jeweils weitere Teilumgebungen 104 der Ausführungsumgebung 100 ausgeführt.

Das Steuerprogramm 10 umfasst eine erste Anwendung 15, eine zweite Anwendung 16 und eine dritte Anwendung 17. Die Anwendungen 15, 16, 17 umfassen jeweils über Ereignis- und Datenverbindungen miteinander verbundene Funktionsmodule 20, wobei die erste und zweite Anwendung 15, 16 jeweils ein Anfangsmodul 21 und je ein mit dem Anfangsmodul 21 der betreffenden Anwendung 15, 16 verbundenes erstes und zweites Abschlussmodul 27, 28 umfassen. Die dritte Anwendung 17 umfasst nur ein einzelnes mit einem Anfangsmodul 21 verbundenes Abschlussmodul 27. Dabei können die einzelnen Abschlussmodule 27, 28 jeweils über in Fig. 3 nicht dargestellte zusätzliche Funktionsmodule 20 mit ihrem jeweiligen Anfangsmodul 21 verbunden sein. Außerdem können die einzelnen Anwendungen 15, 16, 17 jeweils mehr als ein Anfangsmodul 21 aufweisen. Die Anfangsmodule 21 sind jeweils als *responder function blocks* ausgebildete *service function blocks* gemäß IEC 61499.

Bei einer Ausführung des Steuerprogramms 10 werden ausgehend von den einzelnen Anfangsmodulen 21 alle über Ereignisverbindungen miteinander verbundenen Funktionsmodule 20 der Reihe nach bis zur Ausführung der einzelnen Abschlussmodule 27, 28 ausgeführt. Die erste Anwendung 15 wird verteilt in der ersten Teilumgebung 101 auf der ersten Ausführungsressource 311 und in der zweiten Teilumgebung 102 auf der dritten Ausführungsressource 321 ausgeführt. Dabei wird ein zur Ausführung des ersten Abschlussmoduls 27 führender Programmteil vollständig in der ersten Teilumgebung 101 und ein zur Ausführung des zweiten Abschlussmoduls 28 führender Programmteil teilweise in der ersten Teilumgebung 101 und teilweise in der zweiten Teilumgebung 102 ausgeführt. Die zweite Anwendung 16 wird vollständig in der auf der zweiten Ausführungsressource 312 ausgeführten weiteren Teilumgebung 104 ausgeführt, die dritte Anwendung 17 verteilt in der zweiten Teilumgebung 102 und der auf der vierten Ausführungsressource 322 ausgeführten weiteren Teilumgebung 104.

Bei dem dargestellten Steuerprogramm 10 wird die Ausführung der Anfangsmodule 21 jeweils durch externe Ursprungsereignisse 45 ausgelöst, welche in der Erfassung von Sensorsignalen 132 durch die Sensoren 188, 189 bestehen. Die Sensorsignale 132 werden über die Kommunikationsverbindung 60 zu den Teilgeräten 310, 320 der Steuerung 5 übertragen und über mit der Kommunikationsverbindung 60 verbundene externe Eingangsschnittstellen 131 von Schnittstellenmodulen 130 der Ausführungsumgebung 100 eingelesen. Bei der Ausführung der Abschlussmodule 27, 28 werden jeweils Ausgangssignale 134 für die Aktoren 183, 185, 187 der Maschine 1 erstellt, welche über externe Ausgabeschnittstellen 133 der Schnittstellenmodule 130 und die mit den Ausgabeschnittstellen 133 verbundene Kommunikationsverbindung 60 an die Aktoren 183, 185, 187 übertragen werden.

Soweit einander nachfolgende Funktionsmodule 20 auf unterschiedlichen Ausführungsressourcen 311, 312, 321, 322 ausgeführt werden, sind die Ereignis- und Datenverbindungen zwischen den betreffenden Funktionsmodulen 20 über Kommunikationsverbindungen ausgeführt, die die Ausführungsressourcen 311, 312, 321, 322 miteinander verbinden, beispielsweise über den in Fig. 1 dargestellten Feldbus 60 bei auf unterschiedlichen Teilgeräten 310, 320 realisierten Ausführungsressourcen 311, 312, 321, 322 oder über interne Bussysteme einzelner Teilgeräte 310, 320 bei auf demselben Teilgerät 310, 320 ausgeführten Ausführungsressourcen 311, 312, 321, 322.

Das Überwachungsmodul 110 ist dazu eingerichtet, die Ausführungsdauer der zur Ausführung der einzelnen Abschlussmodule 27, 28 führenden Programmteile des Steuerprogramms 5 zu überwachen. Hierzu werden jeweils Ereignisketten gebildet, wobei die einzelnen Ereignisketten jeweils alle Aktivierungsereignisse derjenigen Funktionsmodule 20 erfassen, die als Reaktion auf eines der Eingangssignale 132 der Reihe nach bis zur Ausführung eines der Abschlussmodule 27, 28 ausgeführt werden. Dabei wird für jede Kombination aus einem der Eingangssignale 132 und einem der auf Grundlage des betreffenden Eingangssignals 132 ausgeführten Abschlussmodulen 27, 28 eine eigene Ereigniskette gebildet.

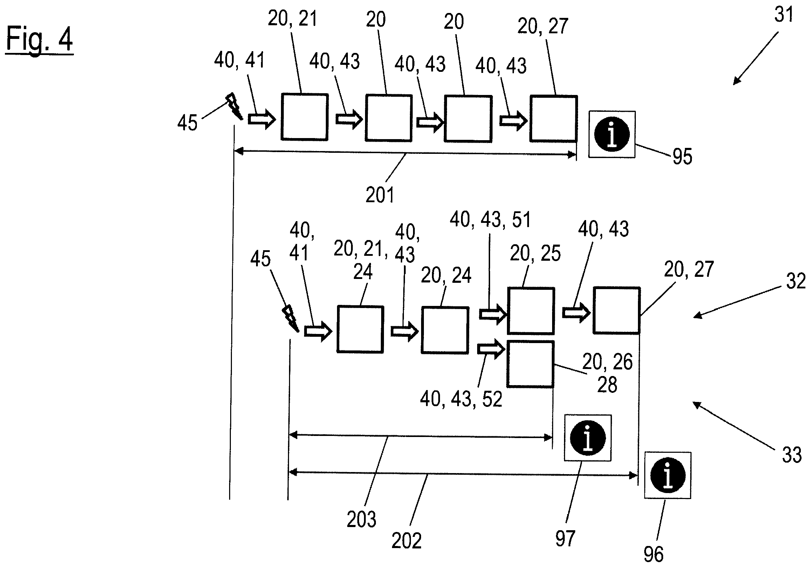

In **Fig. 4** ist beispielhaft eine erste Ereigniskette 31 dargestellt, die die Aktivierungsereignisse 40 aller Funktionsmodule 20 umfasst, welche, beginnend mit dem Anfangsmodul 21 der dritten Anwendung 17, der Reihe nach bis zur Ausführung des Abschlussmoduls 27 der dritten Anwendung 17 erzeugt werden. Die erste Ereigniskette 31 umfasst ein Anfangsereignis 41 zur Aktivierung des Anfangsmoduls 21 und drei Folgeereignisse 43 zur sequentiellen Aktivierung zweier weiterer Funktionsmodule 20 und des Abschlussmoduls 27.

Außerdem ist in Fig. 4 eine zweite Ereigniskette 32 dargestellt, welche die Aktivierungsereignisse 40 aller Funktionsmodule 20 umfasst, die, beginnend mit dem Anfangsmodul 21 der ersten Anwendung 15, bis zur Ausführung des ersten Abschlussmoduls 27 der ersten Anwendung 15 erzeugt werden, und eine dritte Ereigniskette 33 mit den Aktivierungsereignissen 40 aller Funktionsmodule 20, die, beginnend mit dem Anfangsmodul 21 der ersten Anwendung 15, bis zur Ausführung des zweiten Abschlussmoduls 28 der ersten Anwendung 15 erzeugt werden.

Die zweite und dritte Ereigniskette 32, 33 werden durch das gleiche externe Ursprungsereignis 45 bzw. durch das gleiche Eingangssignal 132 ausgelöst. Sie umfassen jeweils ein Anfangsereignis 41 zur Aktivierung eines Anfangsmoduls 21, welches ein gemeinsames Funktionsmodul 24 der zweiten und dritten Ereigniskette 32, 33 bildet. Außerdem umfassen sie jeweils ein Folgeereignis 43 zur Aktivierung eines weiteren gemeinsamen Funktionsmoduls 24. Nach Ausführung des weiteren gemeinsamen Funktionsmoduls 24 werden eine erstes Aktivierungsereignis 51 zur Aktivierung eines ersten Folgemoduls 25 und ein zweites Aktivierungsereignis 52 zur Aktivierung eines zweiten Folgemoduls 26 erzeugt. Das erste Aktivierungsereignis 51 ist Teil der zweiten Ereigniskette 32 und das zweite Aktivierungsereignis 52 ist Teil der dritten Ereigniskette 33.

Nach dem ersten Aktivierungsereignis 51 umfasst die zweite Ereigniskette 32 noch ein Folgeereignis 43 zur Aktivierung des ersten Abschlussmoduls 27 der erste Anwendung 15. Das durch das zweite Aktivierungsereignis 52 aktivierte zweite Funktionsmodul 26 bildet zugleich das zweite Abschlussmodul 28 der ersten Anwendung 15, so dass die dritte Ereigniskette 33 nach dem zweiten Aktivierungsereignis 52 keine weiteren Aktivierungsereignisse 40 mehr umfasst.

Für das in Fig. 3 dargestellte Steuerprogramm 10 werden schließlich auch noch in Fig. 4 nicht gezeigte vierte und fünfte Ereignisketten erstellt. Die vierte und fünfte Ereigniskette umfassen alle Aktivierungsereignisse derjenigen Funktionsmodule, die ausgehend von dem Anfangsmodul 21 der zweiten Anwendung 16 der Reihe nach bis zur Ausführung des ersten bzw. zweiten Abschlussmoduls 27, 28 der zweiten Anwendung 16 ausgeführt werden.

Das Überwachungsmodul 110 ist dazu ausgebildet, eine erste Überprüfung 95 durchzuführen, bei der eine erste Ausführungsdauer 201 der Funktionsmodule 20 der ersten Ereigniskette 31 auf eine Überschreitung einer ersten vorgegebenen Zeitdauer überprüft wird. Überschreitet die erste Ausführungsdauer 201 die erste vorgegebene Zeitdauer, so führt das Überwachungsmodul 110 eine erste Überschreitungsreaktion aus.

Die erste Ausführungsdauer 201 beginnt mit dem die Ausführung der ersten Ereigniskette 31 auslösenden Ursprungsereignis 45 und endet mit Abschluss der Ausführung des Abschlussmoduls 27 der ersten Ereigniskette 31. Zur Überprüfung der ersten Ausführungsdauer 201 erzeugt das Überwachungsmodul 110 einen ersten Zeitstempel, welcher den Zeitpunkt des Ursprungsereignisses 45 enthält. Hierzu addiert das Überwachungsmodul 110 zu einem Zeitpunkt, zu dem ein das Anfangsmodul 21 auslösendes Anfangsereignis 41 erstellt wird, eine zusätzliche Verzögerungszeit, welche seit dem Ursprungsereignis 45 und während der Übertragung des Eingangssignals 132 über die Datenverbindung 60 verstrichen ist. Der Zeitstempel wird bei der Erstellung der Folgeereignisse 43 kopiert und jeweils zusammen mit den Folgeereignissen 43 über die Ereignisverbindungen zwischen den Funktionsmodulen 20 übertragen.

Analog zur ersten Überprüfung 95 der ersten Ausführungsdauer 201 ist das Überwachungsmodul 110 dazu ausgebildet, eine zweite Überprüfung 96 einer zweiten Ausführungsdauer 202 der Funktionsmodule 20 der zweiten Ereigniskette 32 auf eine Überschreitung einer zweiten vorgegebenen Zeitdauer und eine dritte Überprüfung 97 einer dritten Ausführungsdauer 203 der dritten Ereigniskette 33 auf eine Überschreitung einer dritten vorgegebenen Zeitdauer durchzuführen. Bei der Überschreitung der zweiten vorgegebenen Zeitdauer wird eine zweite Überschreitungsreaktion und bei der Überschreitung der dritten vorgegebenen Zeitdauer eine dritte Überschreitungsreaktion ausgeführt.

Da das Abschlussmodul 27 der ersten Ereigniskette 31 auf der vierten Ausführungsressource 322 ausgeführt wird, erfolgt die erste Überprüfung 95 durch ein auf der vierten Ausführungsressource 322 ausgeführtes Teilmodul des Überwachungsmoduls 110. Die zweite Überprüfung 96 erfolgt durch ein auf der dritten Ausführungsressource 321 ausgeführtes Teilmodul des Überwachungsmoduls 110 und die dritte Überprüfung 97 erfolgt durch ein auf der ersten Ausführungsressource 311 ausgeführtes Teilmodul des Überwachungsmoduls 110.

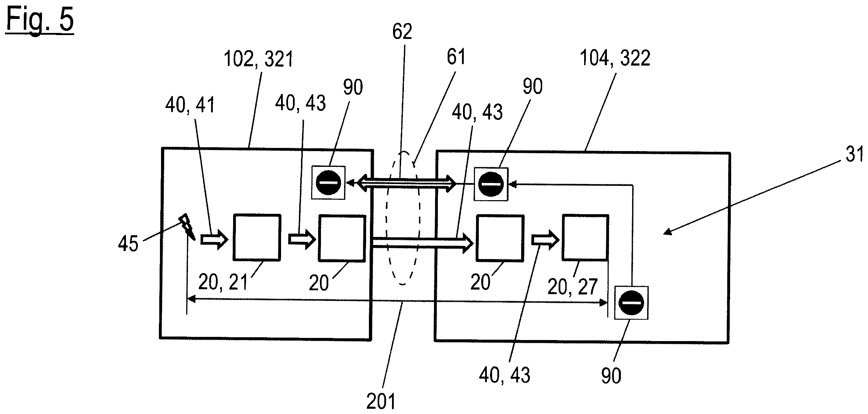

**Fig. 5** zeigt eine Übertragung einer auf der vierten Ausführungsressource 322 festgestellten Überschreitung 90 der ersten vorgegebenen Zeitdauer bei Ausführung der ersten Ereigniskette 31 von der vierten Ausführungsressource 322 auf die dritte Ausführungsressource 321.

Die dritte und vierte Ausführungsressource 321, 322 sind durch eine interne Kommunikationsverbindung 61, etwa eine interne Busverbindung, des zweiten Teilgeräts 320 verbunden. Über die interne Kommunikationsverbindung 61 ist ein Kommunikationskanal 62 realisiert, über welchen die auf der vierten Ausführungsressource 322 festgestellte Überschreitung 90 der ersten vorgegebenen Zeitdauer an die dritte Ausführungsressource 321 übertragen wird. Aufgrund der übertragenen Überschreitung 90 löst das auf der dritten Ausführungsressource 321 ausgeführte Teilmodul des Überwachungsmoduls 110 eine eigene Überschreitungsreaktion aus. Über die interne Kommunikationsverbindung 61 wird zusätzlich auch ein Aktivierungsereignis 40 zur Aktivierung eines der Folgemodule 25 der ersten Ereigniskette 31 übertragen.

Bei alternativen Ausführungsformen können die dritte und vierte Ausführungsressource 321, 322 auf getrennten Teilgeräten 310, 320 der Steuerung 5 ausgeführt sein. In diesen Fällen kann der Kommunikationskanal 62 auch über eine diese beiden Teilgeräte 310, 320 verbindende externe Kommunikationsverbindung, beispielsweise über den Feldbus 60, ausgeführt sein.

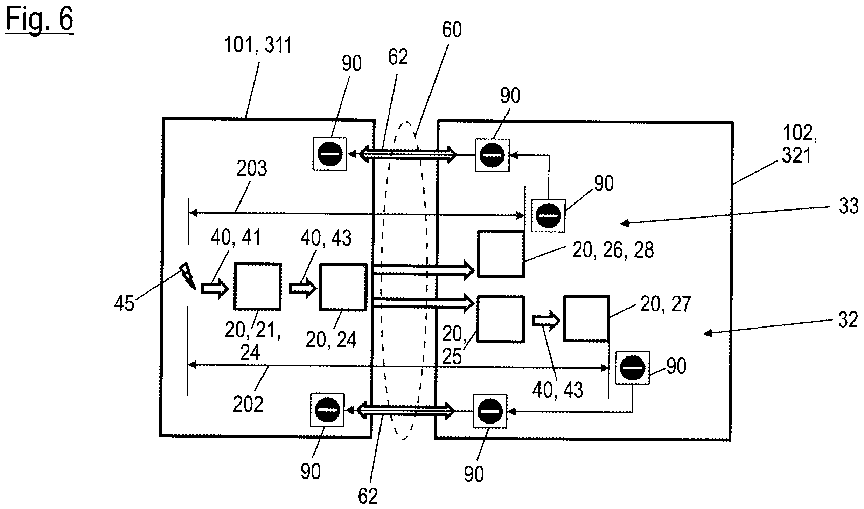

**Fig. 6** zeigt eine Übertragung von Überschreitungen 90 der zweiten und dritten vorgegebenen Zeitdauer bei Ausführung der zweiten bzw. dritten Ereigniskette 32, 33 über die Kommunikationsverbindung 60. Dabei ist eine Variante der Ausführungsumgebung 100 dargestellt, bei der sowohl das erste Abschlussmodul 27, als auch das zweite Abschlussmodul 28 der erste Anwendung 15 auf der dritten Ausführungsressource 321 ausgeführt werden.

Für die Übertragung der Überschreitung 90 der zweiten vorgegebenen Zeitdauer bei Ausführung der zweiten Ereigniskette 32 und für die Übertragung der Überschreitung 90 der dritten vorgegebenen Zeitdauer bei Ausführung der dritten Ereigniskette 33 sind jeweils separate Kommunikationskanäle 62 über die Kommunikationsverbindung 60 vorgesehen. Die Kommunikationskanäle 62 werden durch Kommunikationsdaten realisiert, anhand derer unterschieden werden kann, ob die erste oder zweite Ausführungsdauer 202, 203 ihre jeweilig vorgegebene Zeitdauer überschritten hat. Dies ermöglicht es, die in der ersten Ausführungsressource 311 ausgelöste Überschreitungsreaktion in Abhängigkeit von der Ereigniskette 32, 33, deren Ausführungsdauer 202, 203 ihre vorgegebene Zeitdauer überschritten hat, anzupassen.

Bei alternativen Ausführungsformen können die Überschreitungen 90 der ersten und zweiten vorgegebenen Zeitdauer auch über einen einzelnen Kommunikationskanal 62 übertragen werden, so dass die übertragene Datenmenge reduziert wird. In diesen Fällen kann in der ersten Ausführungsressource 311 nicht unterschieden werden, welche Ereigniskette 32, 33 ihre vorgegebene Zeitdauer überschritten hat, und es wird immer die gleiche Überschreitungsreaktion ausgeführt.

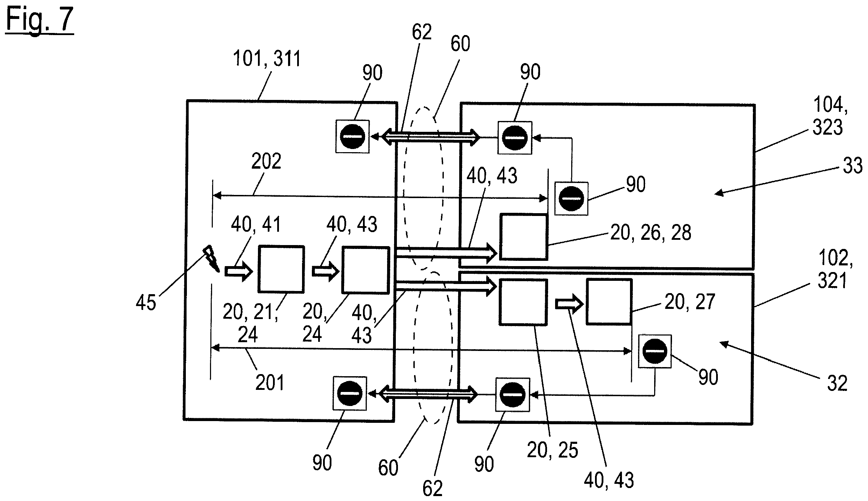

**Fig. 7** zeigt eine Ausführungsform der Ausführungsumgebung 100, bei der die Abschlussmodule 27, 28 der zweiten und dritten Ereigniskette 32, 33 in getrennten Ausführungsressourcen, nämlich in der dritten Ausführungsressource 321 und einer weiteren Ausführungsressource 323 ausgeführt werden. Die erste und dritte Ausführungsressource 311, 311, sowie die weitere Ausführungsressource 323 sind dabei jeweils auf getrennten Teilgeräten der Steuerung 5 realisiert, wobei die Teilgeräte über den Feldbus 60 miteinander verbunden sind. Auch bei dieser Ausführungsform werden in den einzelnen Ausführungsressourcen festgestellte Überschreitungen 90 der vorgegebenen Zeitdauern über Kommunikationskanäle 62 auf dem Feldbus 60 übertragen.

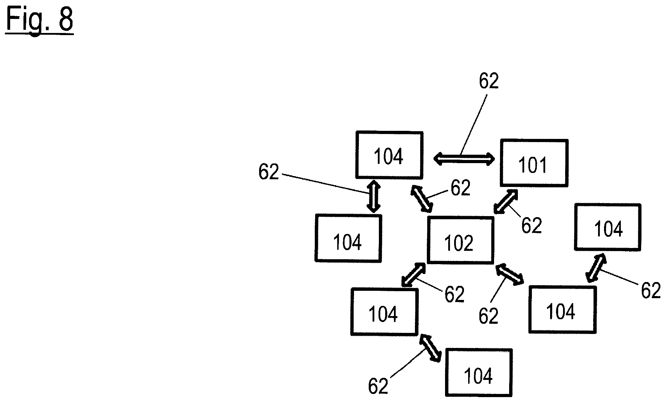

In **Fig. 8** ist eine Ausführungsform der Ausführungsumgebung 100 gezeigt, bei dem die auf der dritten Ausführungsressource 321 ausgeführte zweite Teilumgebung 102 nicht nur mit der ersten Teilumgebung 101, sondern auch mit weiteren Teilumgebung 104 über Kommunikationskanäle 62 verbunden ist. Zusätzlich sind die erste Teilumgebung 101 und/oder die weiteren Teilumgebung 104 ihrerseits mit weiteren Teilumgebungen 104 der Ausführungsumgebung 100 über Kommunikationskanäle 62 verbunden.

Die in den einzelnen Teilumgebungen 101, 102, 104 ausgeführten Teilmodule des Überwachungsmoduls 110 sind jeweils dazu ausgebildet, eine bei einer Ausführung einer Ereigniskette selbst festgestellte Überschreitung einer vorgegebenen Zeitdauer über die Kommunikationskanäle 62 an alle verbundenen Teilumgebungen 101, 102, 104 und die darin ausgeführten Teilmodule des Überwachungsmoduls 110 weiterzuleiten. Zusätzlich sind die in den einzelnen Teilumgebungen 101, 102, 104 ausgeführten Teilmodule des Überwachungsmoduls 110 jeweils dazu ausgebildet, über einen der Kommunikationskanäle 62 empfangene Überschreitungen über alle übrigen Kommunikationskanäle 62 weiterzuleiten.

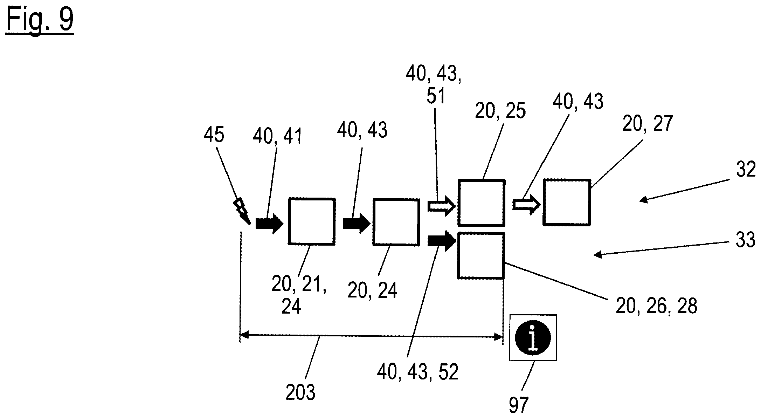

In **Fig. 9** ist eine Ausführungsform der Ausführungsumgebung 100 gezeigt, bei der lediglich die Ausführungsdauer 203 der zweiten Ereigniskette 32 auf das Überschreiten einer vorgegebenen Zeitdauer überprüft wird, nicht jedoch die Ausführungsdauer der dritten Ereigniskette 33. Hierzu ist in dem Steuerprogramm 10 eine Information hinterlegt, dass eine Ereignisverbindung zur Übertragung des ersten Aktivierungsereignisses 51 einer Ereigniskette 32 zugeordnet ist, deren Ausführungsdauer nicht überprüft wird, und es ist eine weitere Information hinterlegt, dass eine Ereignisverbindung zur Übertragung des zweiten Aktivierungsereignisses 52 einer Ereigniskette 33 zugeordnet ist, deren Ausführungsdauer überprüft wird.

Bei der Erstellung der Aktivierungsereignisse 51, 52 während der Laufzeit des Steuerprogramms 10 können die hinterlegten Informationen dann verwendet werden, eine Überprüfung der Ausführungsdauer der dritten Ereigniskette 33 auszulösen und eine Überprüfung der Ausführungsdauer der zweiten Ereigniskette 32 zu unterbinden. Die Informationen können beispielsweise als den einzelnen Ereignisverbindungen zugeordnete Attribute hinterlegt sein. Allgemein kann für jede Ereignisverbindung des Steuerprogramms 10 eine Information hinterlegt sein, ob über die jeweilige Ereignisverbindung übertragene Aktivierungsereignisse Bestandteile einer Ereigniskette sind, deren Ausführungsdauer überwacht wird oder nicht.

Bei den im Zusammenhang mit den vorangegangenen Figuren beschriebenen Ausführungsformen der Ausführungsumgebung 100 werden die Ausführungsdauern der einzelnen Ereignisketten 31, 32, 33 jeweils ausschließlich nach Ausführung der Abschlussmodule 27, 28 auf ein Überschreiten der vorgegebenen Zeitdauern überprüft. Bei alternativen Ausführungsformen der Ausführungsumgebung 100 können die Ausführungsdauern der Ereignisketten 31, 32, 33 auch jeweils nach Ausführung der einzelnen Funktionsmodule 20 auf ein Überschreiten der vorgegebenen Zeitdauer überprüft werden.

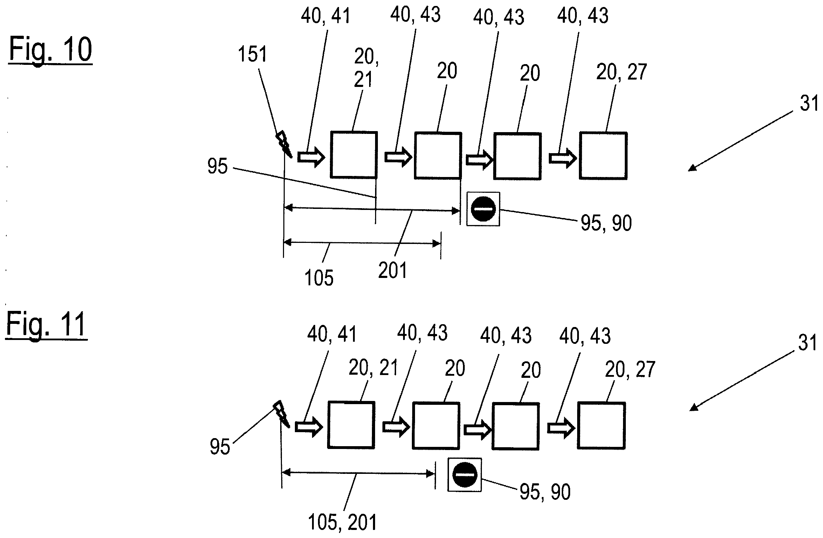

Eine derartige alternative Ausführungsform ist in **Fig. 10** dargestellt. Hier wird bereits bei einer Überprüfung 95, welche nach Ausführung des zweiten Funktionsmoduls 20 ausgeführt wird, ein Überschreiten 90 der ersten vorgegebenen Zeitdauer 105 festgestellt und eine Überschreitungsreaktion ausgelöst. Damit verstreicht bei dieser Ausführungsform nach dem Ablauf der vorgegebenen Zeitdauer 150 weniger Zeit, bis das Überprüfungsmodul 110 den Ablauf der vorgegebenen Zeitdauer 150 feststellt, als bei den im Zusammenhang mit den Figuren 1 bis 9 beschriebenen Ausführungsformen.

Wie in **Fig. 11** dargestellt ist, kann die Überprüfung 95 auf das Überschreiten 90 der vorgegebenen Zeitdauern auch während der Ausführung der einzelnen Funktionsmodule 20 erfolgen, beispielsweise in periodischen Abständen. Bei derartigen Ausführungsformen wird das Überschreiten 90 der vorgegebenen Zeitdauern quasi instantan festgestellt.

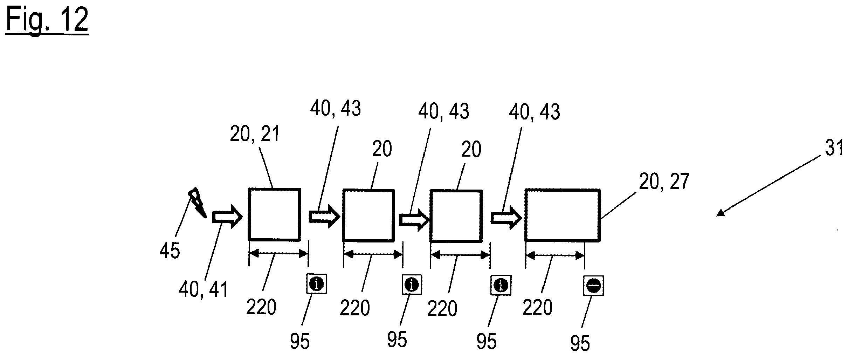

**Fig. 12** zeigt eine Ausführungsform der Ausführungsumgebung 100, bei der die Ausführungsdauer der Ereigniskette 31 dadurch auf ein Überschreiten einer vorgegebenen Zeitdauer überprüft wird, dass Einzelausführungsdauern für die Ausführung der einzelnen Funktionsmodule 20 der Ereigniskette 31 auf ein Überschreiten vorgegebener Einzelzeitdauern 220 überwacht werden. Anders als in Fig. 12 dargestellt, können dabei die für die Ausführung der einzelnen Funktionsmodule 20 vorgegebenen Einzelzeitdauern 220 auch unterschiedlich lang sein. Bei alternativen Ausführungsformen kann zusätzlich auch die gesamte Ausführungsdauer der Ereigniskette 31 auf ein Überschreiten einer Gesamtzeitdauer überprüft werden, beispielsweise in periodischen Zeitabständen während der Ausführung der Funktionsmodule 20 und/oder jeweils nach Ausführung der einzelnen Funktionsmodule 20 und/oder ausschließlich nach Ausführung des Abschlussmoduls 27.

Die im Zusammenhang mit den Figuren 9 bis 12 beschriebenen Abwandlungen der Ausführungsumgebung 100 können zusammen oder einzeln auch analog bei den im Zusammenhang mit den Figuren 1 bis 8 beschriebenen Ausführungsformen vorhanden sein.

### Bezugszeichenliste

- 1: Maschine
- 5: speicherprogrammierbare Steuerung
- 10: Steuerprogramm
- 11: erstes Teilprogramm
- 12: zweites Teilprogramm
- 15: erste Anwendung
- 16: zweite Anwendung
- 17: dritte Anwendung
- 20: Funktionsmodule
- 21: Anfangsmodul
- 24: gemeinsames Funktionsmodul
- 25: erstes Folgemodul
- 26: zweites Folgemodul
- 27: erstes Abschlussmodul
- 28: zweites Abschlussmodul
- 31: erste Ereigniskette
- 32: zweite Ereigniskette
- 33: dritte Ereigniskette
- 40: Aktivierungsereignisse
- 41: Anfangsereignis
- 43: Folgeereignis
- 45: externes Ursprungsereignis
- 51: erstes Aktivierungsereignis
- 52: zweites Aktivierungsereignis
- 60: Kommunikationsverbindung
- 61: interne Kommunikationsverbindung
- 62: Kommunikationskanal
- 80: Ereignisverbindung
- 82: Datenverbindung
- 84: vorangehendes Funktionsmodul
- 85: nachfolgendes Funktionsmodul
- 90: Überschreitung
- 95: erste Überprüfung
- 96: zweite Überprüfung
- 97: dritte Überprüfung
- 100: Ausführungsumgebung
- 101: erste Teilumgebung
- 102: zweite Teilumgebung
- 104: weitere Teilumgebungen
- 105: vorgegebene Zeitdauer
- 110: Überwachungsmodul
- 111: erstes Teilmodul
- 112: zweites Teilmodul
- 120: Ausführungsmodul
- 130: Schnittstellenmodul
- 131: externe Eingangsschnittstelle
- 132: Eingangssignal
- 133: externe Ausgabeschnittstelle
- 134: Ausgangssignal
- 181: Greifer
- 182: Transversalkinematik
- 183: erster Aktor
- 184: Höhenkinematik
- 185: zweiter Aktor
- 186: Förderer
- 187: dritter Aktor
- 188: sicherheitsgerichteter Sensor
- 189: Sensor
- 195: Werkstück
- 201: erste Ausführungsdauer
- 202: zweite Ausführungsdauer
- 203: dritte Ausführungsdauer
- 220: Einzelzeitdauer
- 310: erstes Teilgerät
- 311: erste Ausführungsressource
- 312: zweite Ausführungsressource
- 314: weitere Ausführungsressourcen
- 320: zweites Teilgerät
- 321: dritte Ausführungsressource
- 322: vierte Ausführungsressource
- 323: weitere Ausführungsressource

## Patentansprüche

1. Ausführungsumgebung (100) zur Ausführung eines ereignisorientierten Steuerprogramms (10) einer speicherprogrammierbaren Steuerung (5), wobei das Steuerprogramm (10) mehrere nacheinander auszuführende Funktionsmodule (20) umfasst,
wobei die Ausführungsumgebung (100) dazu eingerichtet ist, die Funktionsmodule (20) ereignisgesteuert bei Eintritt von den einzelnen Funktionsmodulen (20) jeweils zugeordneten Aktivierungsereignissen (40) auszuführen,
wobei die einzelnen Aktivierungsereignisse (40) der nacheinander auszuführenden Funktionsmodule (20) eine Ereigniskette (31, 32, 33) bilden, wobei die Ausführungsumgebung (100) ein Überwachungsmodul (110) zur Überwachung einer Ausführungsdauer (201, 202, 203) der Funktionsmodule (20) der Ereigniskette (31, 32, 33) umfasst,
wobei das Überwachungsmodul (110) dazu eingerichtet ist, die Ausführungsdauer (201, 202, 203) auf ein Überschreiten (90) einer vorgegebenen Zeitdauer (105) zu überprüfen,
**dadurch gekennzeichnet, dass**
das Überwachungsmodul (110) getrennt von einem die einzelnen Funktionsmodule (20) der Ereigniskette (31, 32, 33) ausführenden Ausführungsmodul (120) der Ausführungsumgebung (100) ausgebildet ist.

2. Ausführungsumgebung (100) nach Anspruch 1,
wobei ein erstes Aktivierungsereignis (40) der Ereigniskette (31, 32, 33) ein bei einer Aktivierung einer externen Eingangsschnittstelle (131) der Ausführungsumgebung (100) erzeugtes Anfangsereignis (41) bildet und/oder
wobei ein letztes der nacheinander auszuführenden Funktionsmodule (20) ein Abschlussmodul (27, 28) zum Bewirken einer Systemreaktion der Ausführungsumgebung (100), beispielsweise zur Aktivierung einer externen Ausgabeschnittstelle (133) der Ausführungsumgebung (100), bildet.

3. Ausführungsumgebung (100) nach mindestens einem der vorherigen Ansprüche,
wobei die Ausführungsumgebung (100) dazu eingerichtet ist, einen den Beginn der Ausführungsdauer (201, 202, 203) anzeigenden Zeitstempel zu erzeugen,
wobei das Überwachungsmodul (110) dazu eingerichtet ist, die Ausführungsdauer (201, 202, 203) durch einen Vergleich des Zeitstempels mit einer aktuellen Zeit zu bestimmen.

4. Ausführungsumgebung (100) nach Anspruch 3,
wobei die Ausführungsumgebung (100) dazu eingerichtet ist, den Zeitstempel zunächst einem die Ausführung eines ersten Funktionsmoduls (21) auslösenden Anfangsereignis (41) der Ereigniskette (31, 32, 33) zuzuordnen, wobei bei der Ausführung der einzelnen Funktionsmodule (20) jeweils Aktivierungsereignisse (40) für nachfolgend auszuführende Funktionsmodule (20) erstellt werden und
wobei den Aktivierungsereignissen (40) der nachfolgend auszuführenden Funktionsmodule (20) der Zeitstempel des Aktivierungsereignisses (40) des jeweilig ausgeführten Funktionsmoduls (20) zugeordnet wird.

5. Ausführungsumgebung (100) nach mindestens einem der vorherigen Ansprüche,
wobei die Ausführungsumgebung (100) zur Ausführung der Funktionsmodule (20) mehrere getrennt voneinander ausführbare Teilumgebungen (101, 102, 104) umfasst,
wobei die Teilumgebungen (101, 102, 104) auf getrennten Ausführungsressourcen (311, 312, 321, 322) der Steuerung (5) ausführbar sind,
wobei die Ereigniskette (31, 32, 33) ein durch ein Anfangsereignis (41) der Ereigniskette (31, 32, 33) ausgelöstes und in einer ersten Teilumgebung (101, 102, 104) ausgeführtes erstes Funktionsmodul (21) und ein durch ein zeitlich nachfolgendes Folgeereignis der Ereigniskette (31, 32, 33) ausgelöstes und in einer zweiten Teilumgebung (101, 102, 104) ausgeführtes zweites Funktionsmodul (20) umfasst,
wobei das Überwachungsmodul (110) ein erstes Teilmodul (111, 112) und ein zweites Teilmodul (111, 112) umfasst,
wobei das erste Teilmodul (111, 112) dazu eingerichtet ist, die Ausführungsdauer (201, 202, 203) in der ersten Teilumgebung (101, 102, 104) zu überwachen, und
wobei das zweite Teilmodul (111, 112) dazu eingerichtet ist, die Ausführungsdauer (201, 202, 203) in der zweiten Teilumgebung (101, 102, 104) zu überwachen.

6. Ausführungsumgebung (100) nach Anspruch 5,
wobei die Ausführungsumgebung (100) dazu eingerichtet ist, einen den Beginn der überwachten Ausführungsdauer (201, 202, 203) anzeigenden Zeitstempel von der ersten Teilumgebung (101, 102, 104) über eine Kommunikationsverbindung (60) zu der zweiten Teilumgebung (101, 102, 104) zu übertragen.

7. Ausführungsumgebung (100) nach mindestens einem der Ansprüche 5 und 6,
wobei die Ausführungsumgebung (100) einen Kommunikationskanal (62) zwischen der ersten und der zweiten Teilumgebung (101, 102, 104) umfasst,
wobei die Ausführungsumgebung (100) dazu eingerichtet ist, über den Kommunikationskanal (62) eine durch das zweite Teilmodul (111, 112) festgestellte Überschreitung (90) der vorgegebenen Zeitdauer (105) an das erste Teilmodul (111, 112) zu übermitteln.

8. Ausführungsumgebung (100) nach mindestens einem der Ansprüche 5 bis 7,
wobei die Ausführungsumgebung (100) eine mit mehreren weiteren Teilumgebungen (101, 102, 104) über Kommunikationskanäle (62) verbundene Teilumgebung (101, 102, 104) umfasst,
wobei die mit den mehreren weiteren Teilumgebungen (101, 102, 104) verbundene Teilumgebung (101, 102, 104) dazu eingerichtet ist, eine über einen der Kommunikationskanäle (62) empfangene Überschreitung (90) der vorgegebenen Zeitdauer (105) über die übrigen Kommunikationskanäle (62) an alle übrigen der über die Kommunikationskanäle (62) verbundenen Teilumgebungen (101, 102, 104) zu übermitteln.

9. Ausführungsumgebung (100) nach mindestens einem der vorherigen Ansprüche,
wobei das Steuerprogramm (10) mindestens zwei Ereignisketten (31, 32, 33) umfasst, die Aktivierungsereignisse (40) zur Aktivierung mindestens eines gemeinsamen Funktionsmoduls (24) umfassen,
wobei das Steuerprogramm (10) dazu eingerichtet ist, nach Ausführung des gemeinsamen Funktionsmoduls (24) ein erstes Aktivierungsereignis (51) der ersten Ereigniskette (31, 32, 33) und, alternativ oder kumulativ, ein zweites Aktivierungsereignis (52) der zweiten Ereigniskette (31, 32, 33) zu erzeugen,
wobei das Überwachungsmodul (110) dazu eingerichtet ist, die Ausführungsdauer (201, 202, 203) der Funktionsmodule (20) der ersten Ereigniskette (31, 32, 33) auf das Überschreiten (90) der vorgegebenen Zeitdauer (105) zu überprüfen.
wobei das Überwachungsmodul (110) dazu eingerichtet ist, die Ausführungsdauer (201, 202, 203) der Funktionsmodule (20) der zweiten Ereigniskette (31, 32, 33) auf ein Überschreiten (90) einer weiteren vorgegebenen Zeitdauer (105) zu überprüfen oder keine Überprüfung der Ausführungsdauer (201, 202, 203) der Funktionsmodule (20) der zweiten Ereigniskette (31, 32, 33) durchzuführen.

10. Ausführungsumgebung (100) nach mindestens einem der vorherigen Ansprüche,
wobei das Überwachungsmodul (110) dazu eingerichtet ist, zu überprüfen, ob eine für die Ausführung mehrerer Funktionsmodule (20) der Ereigniskette (31, 32, 33), beispielsweise für die Ausführung aller Funktionsmodule (20) der Ereigniskette (31, 32, 33), vorgegebene Gesamtzeitdauer überschritten wird, und/oder
wobei das Überwachungsmodul (110) dazu eingerichtet ist, zu überprüfen, ob für die Ausführung einzelner Funktionsmodule (20) der Ereigniskette (31, 32, 33) vorgegebene Einzelzeitdauern (220) überschritten werden.

11. Ausführungsumgebung (100) nach mindestens einem der vorherigen Ansprüche,
wobei das Überwachungsmodul (110) dazu eingerichtet ist, Ausführungsdauern (201, 202, 203) mehrerer Ereignisketten (31, 32, 33) jeweils auf ein Überschreiten (90) vorgegebener Zeitdauern (105) zu überwachen, wobei die für die einzelnen Ereignisketten (31, 32, 33) vorgegebenen Zeitdauern (105) jeweils in Abhängigkeit von die einzelnen Ereignisketten (31, 32, 33) auslösenden Anfangsereignissen (41) vorgegeben sind.

12. Ausführungsumgebung (100) nach mindestens einem der vorherigen Ansprüche,
wobei das Überwachungsmodul (110) dazu eingerichtet ist, bei einem Überschreiten (90) der vorgegebenen Zeitdauer (105) eine Überschreitungsreaktion auszulösen, beispielsweise eine Alarmmeldung und/oder Steuerreaktion, beispielsweise eine Steuerreaktion zur Überführung einer mittels des Steuerprogramms (10) gesteuerten Maschine (1) in einen sicheren Zustand.

13. Ausführungsumgebung (100) nach mindestens einem der vorherigen Ansprüche,
wobei das Überwachungsmodul (110) dazu eingerichtet ist, die Ausführungsdauer (201, 202, 203) jeweils nach Ausführung der den einzelnen Aktivierungsereignissen (40) der Ereigniskette (31, 32, 33) zugeordneten Funktionsmodulen (20) auf das Überschreiten der vorgegebenen Zeitdauer (105) zu überprüfen, und/oder
wobei das Überwachungsmodul (110) dazu eingerichtet ist, die Ausführungsdauer (201, 202, 203) während der Ausführung der einzelnen Funktionsmodule (20) der Ereigniskette (31, 32, 33) auf das Überschreiten (90) der vorgegebenen Zeitdauer (105) zu überprüfen.

14. Speicherprogrammierbare Steuerung (5) mit einem Speichermodul, in dem eine Ausführungsumgebung (100) nach einem der vorhergehenden Ansprüche zur Ausführung durch die Steuerung (5) abgelegt ist.

15. Verfahren zur Ausführung eines ereignisorientierten Steuerprogramms (10) einer speicherprogrammierbaren Steuerung (5) in einer Ausführungsumgebung (100),
wobei das Steuerprogramm (10) mehrere nacheinander auszuführende Funktionsmodule (20) umfasst,
wobei die Funktionsmodule (20) ereignisgesteuert bei Eintritt von den einzelnen Funktionsmodulen (20) jeweils zugeordneten Aktivierungsereignissen (40) ausgeführt werden,
wobei das Verfahren die folgenden Schritte umfasst:
- Bilden einer Ereigniskette (31, 32, 33) aus den Aktivierungsereignissen (40) der nacheinander auszuführenden Funktionsmodule (20);
- Überwachen einer Ausführungsdauer (201, 202, 203) der Funktionsmodule (20) der Ereigniskette (31, 32, 33) mittels eines Überwachungsmoduls (110) der Ausführungsumgebung (100);
- Überprüfen der Ausführungsdauer (201, 202, 203) auf ein Überschreiten (90) einer vorgegebenen Zeitdauer (105),
**dadurch gekennzeichnet, dass**
das Überwachungsmodul (110) getrennt von einem die einzelnen Funktionsmodule (20) der Ereigniskette (31, 32, 33) ausführenden Ausführungsmodul (120) der Ausführungsumgebung (100) ausgebildet ist.

## Claims

1. An execution environment (100) for executing an event-oriented control program (10) of a programmable logic controller (5),
wherein the control program (10) comprises a plurality of functional modules (20) to be successively executed,
wherein the execution environment (100) is configured to execute the functional modules (20) in an event-controlled manner on the occurrence of activation events (40) which are each associated with the individual functional modules (20),
wherein the individual activation events (40) of the functional modules (20) to be successively executed form an event chain (31, 32, 33),
wherein the execution environment (100) comprises a monitoring module (110) for monitoring an execution duration (201, 202, 203) of the functional modules (20) of the event chain (31, 32, 33),
wherein the monitoring module (110) is configured to check the execution duration (201, 202, 203) for an exceeding (90) of a predefined time duration (105),
**characterized in that**
the monitoring module (110) is formed separately from an execution module (120) of the execution environment (100) executing the individual functional modules (20) of the event chain (31, 32, 33).

2. An execution environment (100) according to claim 1,
wherein a first activation event (40) of the event chain (31, 32, 33) forms an initial event (41) generated on an activation of an external input interface (131) of the execution environment (100), and/or
wherein a last one of the functional modules (20) to be successively executed forms an end module (27, 28) for causing a system response of the execution environment (100), for example, for activating an external output interface (133) of the execution environment (100).

3. An execution environment (100) according to at least one of the preceding claims,
wherein the execution environment (100) is configured to generate a time stamp indicating the start of the execution duration (201, 202, 203),
wherein the monitoring module (110) is configured to determine the execution duration (201, 202, 203) by comparing the time stamp with a current time.

4. An execution environment (100) according to claim 3,
wherein the execution environment (100) is configured to first associate the time stamp with an initial event (41) of the event chain (31, 32, 33) that triggers the execution of a first functional module (21),
wherein, on the execution of the individual functional modules (20), activation events (40) are in each case created for functional modules (20) to be subsequently executed, and
wherein the time stamp of the activation event (40) of the respective executed functional module (20) is associated with the activation events (40) of the functional modules (20) to be subsequently executed.

5. An execution environment (100) according to at least one of the preceding claims,
wherein the execution environment (100) for executing the functional modules (20) comprises a plurality of part environments (101, 102, 104) which can be executed separately from one another,
wherein the part environments (101, 102, 104) can be executed on separate execution resources (311, 312, 321, 322) of the controller (5), wherein the event chain (31, 32, 33) comprises a first functional module (21), which is triggered by an initial event (41) of the event chain (31, 32, 33) and which is executed in a first part environment (101, 102, 104), and a second functional module (20) which is triggered by a temporally following subsequent event of the event chain (31, 32, 33) and which is executed in a second part environment (101, 102, 104),
wherein the monitoring module (110) comprises a first part module (111, 112) and a second part module (111, 112),
wherein the first part module (111, 112) is configured to monitor the execution duration (201, 202, 203) in the first part environment (101, 102, 104), and
wherein the second part module (111, 112) is configured to monitor the execution duration (201, 202, 203) in the second part environment (101, 102, 104).

6. An execution environment (100) according to claim 5,
wherein the execution environment (100) is configured to transmit a time stamp indicating the start of the monitored execution duration (201, 202, 203) from the first part environment (101, 102, 104) to the second part environment (101, 102, 104) via a communication link (60).

7. An execution environment (100) according to at least one of the claims 5 and 6,
wherein the execution environment (100) comprises a communication channel (62) between the first and the second part environment (101, 102, 104),
wherein the execution environment (100) is configured to communicate, via the communication channel (62), an exceeding (90) of the predefined time duration (105) determined by the second part module (111, 112) to the first part module (111, 112).

8. An execution environment (100) according to at least one of the claims 5 to 7,
wherein the execution environment (100) comprises a part environment (101, 102, 104) connected to a plurality of further part environments (101, 102, 104) via communication channels (62),
wherein the part environment (101, 102, 104) connected to the plurality of further part environments (101, 102, 104) is configured to transmit an exceeding (90) of the predefined time duration (105), which is received via one of the communication channels (62), via the remaining communication channels (62) to all the remaining part environments (101, 102, 104) connected via the communication channels (62).

9. An execution environment (100) according to at least one of the preceding claims,
wherein the control program (10) comprises at least two event chains (31, 32, 33) which comprise activation events (40) for activating at least one common functional module (24),
wherein the control program (10) is configured to generate a first activation event (51) of the first event chain (31, 32, 33) and, alternatively or cumulatively, a second activation event (52) of the second event chain (31, 32, 33) after the execution of the common functional module (24),
wherein the monitoring module (110) is configured to check the execution duration (201, 202, 203) of the functional modules (20) of the first event chain (31, 32, 33) for the exceeding (90) of the predefined time duration (105),
wherein the monitoring module (110) is configured to check the execution duration (201, 202, 203) of the functional modules (20) of the second event chain (31, 32, 33) for an exceeding (90) of a further predefined time duration (105) or not to perform a check of the execution duration (201, 202, 203) of the functional modules (20) of the second event chain (31, 32, 33).

10. An execution environment (100) according to at least one of the preceding claims,
wherein the monitoring module (110) is configured to check whether a total time duration predefined for the execution of a plurality of functional modules (20) of the event chain (31, 32, 33), for example for the execution of all the functional modules (20) of the event chain (31, 32, 33), is exceeded, and/or
wherein the monitoring module (110) is configured to check whether individual time durations (220) predefined for the execution of individual functional modules (20) of the event chain (31, 32, 33) are exceeded.

11. An execution environment (100) according to at least one of the preceding claims,
wherein the monitoring module (110) is configured to monitor execution durations (201, 202, 203) of a plurality of event chains (31, 32, 33) for an exceeding (90) of predefined time durations (105) in each case,
wherein the time durations (105) predefined for the individual event chains (31, 32, 33) are in each case predefined in dependence on initial events (41) triggering the individual event chains (31, 32, 33).

12. An execution environment (100) according to at least one of the preceding claims,
wherein the monitoring module (110) is configured, on an exceeding (90) of the predefined time duration (105), to trigger an exceeding response, for example an alarm message and/or a control response, for example a control response for transferring a machine (1) controlled by means of the control program (10) to a safe state.

13. An execution environment (100) according to at least one of the preceding claims,
wherein the monitoring module (110) is configured to check the execution duration (201, 202, 203), in each case after the execution of the functional modules (20) associated with the individual activation events (40) of the event chain (31, 32, 33), for the exceeding of the predefined time duration (105), and/or
wherein the monitoring module (110) is configured to check the execution duration (201, 202, 203) during the execution of the individual functional modules (20) of the event chain (31, 32, 33) for the exceeding (90) of the predefined time duration (105).

14. A programmable logic controller (5) comprising a memory module in which an execution environment (100) according to any one of the preceding claims is stored for execution by the controller (5).

15. A method of executing an event-oriented control program (10) of a programmable logic controller (5) in an execution environment (100), wherein the control program (10) comprises a plurality of functional modules (20) to be successively executed,
wherein the functional modules (20) are executed in an event-controlled manner on the occurrence of activation events (40) which are each associated with the individual functional modules (20),
wherein the method comprises the following steps:
- forming an event chain (31, 32, 33) from the activation events (40) of the functional modules (20) to be successively executed;
- monitoring an execution duration (201, 202, 203) of the functional modules (20) of the event chain (31, 32, 33) by means of a monitoring module (110) of the execution environment (100); and
- checking the execution duration (201, 202, 203) for an exceeding (90) of a predefined time duration (105),
**characterized in that**
the monitoring module (110) is formed separately from an execution module (120) of the execution environment (100) executing the individual functional modules (20) of the event chain (31, 32, 33).

## Revendications

1. Environnement d'exécution (100) pour l'exécution d'un programme de commande (10) orienté événements d'une commande programmable à mémoire (5), le programme de commande (10) comprenant plusieurs modules fonctionnels (20) à exécuter successivement,
dans lequel l'environnement d'exécution (100) est conçu pour exécuter les modules fonctionnels (20) en fonction d'événements lors de l'apparition d'événements d'activation (40) respectivement associés aux modules fonctionnels individuels (20),
dans lequel les événements d'activation individuels (40) des modules fonctionnels (20) à exécuter successivement forment une chaîne d'événements (31, 32, 33),
dans lequel l'environnement d'exécution (100) comprend un module de surveillance (110) pour surveiller une durée d'exécution (201, 202, 203) des modules fonctionnels (20) de la chaîne d'événements (31, 32, 33),
dans lequel le module de surveillance (110) est conçu pour vérifier si la durée d'exécution (201, 202, 203) dépasse (90) une durée prédéfinie (105),
**caractérisé en ce que**
le module de surveillance (110) est réalisé séparément d'un module d'exécution (120) de l'environnement d'exécution (100) exécutant les modules fonctionnels individuels (20) de la chaîne d'événements (31, 32, 33).

2. Environnement d'exécution (100) selon la revendication 1,
dans lequel un premier événement d'activation (40) de la chaîne d'événements (31, 32, 33) forme un événement initial (41) généré lors d'une activation d'une interface d'entrée externe (131) de l'environnement d'exécution (100) et/ou
dans lequel un dernier des modules fonctionnels (20) à exécuter successivement forme un module final (27, 28) destiné à provoquer une réponse système de l'environnement d'exécution (100), par exemple pour activer une interface de sortie externe (133) de l'environnement d'exécution (100).

3. Environnement d'exécution (100) selon au moins l'une des revendications précédentes,
dans lequel l'environnement d'exécution (100) est conçu pour générer un horodatage indiquant le début de la durée d'exécution (201, 202, 203),
dans lequel le module de surveillance (110) est conçu pour déterminer la durée d'exécution (201, 202, 203) par comparaison de l'horodatage avec une heure courante.

4. Environnement d'exécution (100) selon la revendication 3,
dans lequel l'environnement d'exécution (100) est conçu pour associer d'abord l'horodatage à un événement initial (41) de la chaîne d'événements (31, 32, 33) déclenchant l'exécution d'un premier module fonctionnel (21),
dans lequel, lors de l'exécution des modules fonctionnels individuels (20), des événements d'activation (40) sont respectivement créés pour des modules fonctionnels (20) à exécuter ensuite, et
dans lequel l'horodatage de l'événement d'activation (40) du module fonctionnel (20) respectivement exécuté est associé aux événements d'activation (40) des modules fonctionnels (20) à exécuter ensuite.

5. Environnement d'exécution (100) selon au moins l'une des revendications précédentes,
dans lequel l'environnement d'exécution (100) comprend plusieurs sous-environnements (101, 102, 104) exécutables séparément les uns des autres pour l'exécution des modules fonctionnels (20),
dans lequel les sous-environnements (101, 102, 104) sont exécutables sur des ressources d'exécution séparées (311, 312, 321, 322) de la commande (5),
dans lequel la chaîne d'événements (31, 32, 33) comprend un premier module fonctionnel (21) déclenché par un événement initial (41) de la chaîne d'événements (31, 32, 33) et exécuté dans un premier sous-environnement (101, 102, 104) et un deuxième module fonctionnel (21) déclenché par un événement suivant dans le temps de la chaîne d'événements (31, 32, 33) et exécuté dans un deuxième sous-environnement (101, 102, 104),
dans lequel le module de surveillance (110) comprend un premier sous-module (111, 112) et un deuxième sous-module (111, 112),
dans lequel le premier sous-module (111, 112) est conçu pour surveiller la durée d'exécution (201, 202, 203) dans le premier sous-environnement (101, 102, 104), et
dans lequel le deuxième sous-module (111, 112) est conçu pour surveiller la durée d'exécution (201, 202, 203) dans le deuxième sous-environnement (101, 102, 104).

6. Environnement d'exécution (100) selon la revendication 5,
dans lequel l'environnement d'exécution (100) est conçu pour transmettre un horodatage indiquant le début de la durée d'exécution surveillée (201, 202, 203) du premier sous-environnement (101, 102, 104) au deuxième sous-environnement (101, 102, 104) via une liaison de communication (60).

7. Environnement d'exécution (100) selon au moins l'une des revendications 5 et 6,
dans lequel l'environnement d'exécution (100) comprend un canal de communication (62) entre le premier et le deuxième sous-environnement (101, 102, 104),
dans lequel l'environnement d'exécution (100) est conçu pour transmettre au premier sous-module (111, 112), via le canal de communication (62), un dépassement (90) de la durée prédéfinie (105) constaté par le deuxième sous-module (111, 112).

8. Environnement d'exécution (100) selon au moins l'une des revendications 5 à 7,
dans lequel l'environnement d'exécution (100) comprend un sous-environnement (101, 102, 104) relié à plusieurs autres sous-environnements (101, 102, 104) via des canaux de communication (62),
dans lequel le sous-environnement (101, 102, 104) relié aux plusieurs autres sous-environnements (101, 102, 104) est conçu pour transmettre un dépassement (90) de la durée prédéfinie (105) reçu via l'un des canaux de communication (62) à tous les autres sous-environnements (101, 102, 104) reliés via les canaux de communication (62), via les autres canaux de communication (62).

9. Environnement d'exécution (100) selon au moins l'une des revendications précédentes,
dans lequel le programme de commande (10) comprend au moins deux chaînes d'événements (31, 32, 33) qui comprennent des événements d'activation (40) pour activer au moins un module fonctionnel commun (24),
dans lequel le programme de commande (10) est conçu pour générer, après exécution du module fonctionnel commun (24), un premier événement d'activation (51) de la première chaîne d'événements (31, 32, 33) et, alternativement ou cumulativement, un deuxième événement d'activation (52) de la deuxième chaîne d'événements (31, 32, 33),
dans lequel le module de surveillance (110) est conçu pour vérifier si la durée d'exécution (201, 202, 203) des modules fonctionnels (20) de la première chaîne d'événements (31, 32, 33) dépasse (90) la durée prédéfinie (105),
dans lequel le module de surveillance (110) est conçu pour vérifier si la durée d'exécution (201, 202, 203) des modules fonctionnels (20) de la deuxième chaîne d'événements (31, 32, 33) dépasse (90) une autre durée prédéfinie (105) ou pour ne pas vérifier la durée d'exécution (201, 202, 203) des modules fonctionnels (20) de la deuxième chaîne d'événements (31, 32, 33).

10. Environnement d'exécution (100) selon au moins l'une des revendications précédentes,
dans lequel le module de surveillance (110) est conçu pour vérifier si une durée totale prédéfinie pour l'exécution de plusieurs modules fonctionnels (20) de la chaîne d'événements (31, 32, 33), par exemple pour l'exécution de tous les modules fonctionnels (20) de la chaîne d'événements (31, 32, 33), est dépassée, et/ou
dans lequel le module de surveillance (110) est conçu pour vérifier si des durées individuelles prédéfinies (220) pour l'exécution de modules fonctionnels individuels (20) de la chaîne d'événements (31, 32, 33) sont dépassées.

11. Environnement d'exécution (100) selon au moins l'une des revendications précédentes,
dans lequel le module de surveillance (110) est conçu pour surveiller si les durées d'exécution (201, 202, 203) de plusieurs chaînes d'événements (31, 32, 33) dépassent (90) respectivement des durées prédéfinies (105),
dans lequel les durées prédéfinies (105) pour les chaînes d'événements individuelles (31, 32, 33) sont respectivement prédéfinies en fonction d'événements initiaux (41) déclenchant les chaînes d'événements individuelles (31, 32, 33).

12. Environnement d'exécution (100) selon au moins l'une des revendications précédentes,
dans lequel le module de surveillance (110) est conçu pour déclencher une réaction de dépassement en cas de dépassement (90) de la durée prédéfinie (105), par exemple un message d'alarme et/ou une réaction de commande, par exemple une réaction de commande pour faire passer une machine (1) commandée au moyen du programme de commande (10) dans un état sûr.

13. Environnement d'exécution (100) selon au moins l'une des revendications précédentes,
dans lequel le module de surveillance (110) est conçu pour vérifier si la durée d'exécution (201, 202, 203) dépasse la durée prédéfinie (105) chaque fois après exécution des modules fonctionnels (20) associés aux événements d'activation individuels (40) de la chaîne d'événements (31, 32, 33), et/ou
dans lequel le module de surveillance (110) est conçu pour vérifier si la durée d'exécution (201, 202, 203) dépasse (90) la durée prédéfinie (105) pendant l'exécution des modules fonctionnels individuels (20) de la chaîne d'événements (31, 32, 33).

14. Commande programmable à mémoire (5) comportant un module de mémoire dans lequel est enregistré un environnement d'exécution (100) selon l'une des revendications précédentes en vue de son exécution par la commande (5).

15. Procédé pour l'exécution d'un programme de commande (10) orienté événements d'une commande programmable à mémoire (5) dans un environnement d'exécution (100),
dans lequel le programme de commande (10) comprend plusieurs modules fonctionnels (20) à exécuter successivement,
dans lequel les modules fonctionnels (20) sont exécutés en fonction d'événements lors de l'apparition d'événements d'activation (40) respectivement associés aux modules fonctionnels individuels (20),
dans lequel le procédé comprend les étapes consistant à :
- former une chaîne d'événements (31, 32, 33) à partir des événements d'activation (40) des modules fonctionnels (20) à exécuter successivement ;
- surveiller une durée d'exécution (201, 202, 203) des modules fonctionnels (20) de la chaîne d'événements (31, 32, 33) au moyen d'un module de surveillance (110) de l'environnement d'exécution (100) ;
- vérifier si la durée d'exécution (201, 202, 203) dépasse (90) une durée prédéfinie (105),
**caractérisé en ce que**
le module de surveillance (110) est réalisé séparément d'un module d'exécution (120) de l'environnement d'exécution (100) exécutant les modules fonctionnels individuels (20) de la chaîne d'événements (31, 32, 33).
